# EUROPEAN PATENT SPECIFICATION

(11) **EP 4 256 519 B1**
(45) Date of publication and mention of the grant of the patent: **01.07.2026**
(21) Application number: 21824342.6
(22) Date of filing: 01.12.2021
(51) Int. Cl.: G06T 7/33, G06T 7/11

(54) **USING MULTIPLE SUB-VOLUMES, THICKNESSES, AND CURVATURES FOR OCT/OCTA DATA REGISTRATION AND RETINAL LANDMARK DETECTION**
VERWENDUNG MEHRERER SUBVOLUMEN, DICKEN UND KRÜMMUNGEN ZUR OCT/OCTA-DATENREGISTRIERUNG UND NETZHAUTORIENTIERUNGSERKENNUNG
UTILISATION DE MULTIPLES SOUS-VOLUMES, ÉPAISSEURS ET COURBURES POUR ENREGISTREMENT DE DONNÉES OCT/OCTA ET DÉTECTION DE POINTS DE REPÈRE RÉTINIEN

(30) Priority: 04.12.2020 US 202063121514 P
(43) Date of publication of application: 11.10.2023
(73) Proprietor: Carl Zeiss Meditec, Inc., Dublin, CA 94568 (US); Carl Zeiss Meditec AG, 07745 Jena (DE)
(72) Inventor: BAGHERINIA, Homayoun, Bublin, California 94568 (US)
(74) Representative: Nieten, Christoph
(86) International application number: PCT/EP2021/083798
(87) International publication number: WO 2022/117661

(56) References cited:
- WO-A1-2018/175654
- PAN LINGJIAO ET AL: "Segmentation Guided Registration for 3D Spectral-Domain Optical Coherence Tomography Images", IEEE ACCESS, vol. 7, 23 September 2019 (2019-09-23), pages 138833 - 138845, XP011748561, DOI: 10.1109/ACCESS.2019.2943172
- GAN YU ET AL: "An automated 3D registration method for optical coherence tomography volumes", 2014 36TH ANNUAL INTERNATIONAL CONFERENCE OF THE IEEE ENGINEERING IN MEDICINE AND BIOLOGY SOCIETY, IEEE, 26 August 2014 (2014-08-26), pages 3873 - 3876, XP032675775, DOI: 10.1109/EMBC.2014.6944469
- LEE KYUNGMOO ET AL: "Automated segmentation of intraretinal layers from spectral-domain macular OCT: reproducibility of layer thickness measurements", MEDICAL IMAGING 2011: BIOMEDICAL APPLICATIONS IN MOLECULAR, STRUCTURAL, AND FUNCTIONAL IMAGING, SPIE, 1000 20TH ST. BELLINGHAM WA 98225-6705 USA, vol. 7965, no. 1, 3 March 2011 (2011-03-03), pages 1 - 8, XP060008624, DOI: 10.1117/12.878242

## Description

### FIELD OF INVENTION

The present invention is generally directed to optical coherence tomography (OCT) systems. More specifically, it is directed to the registration of corresponding OCT data sets.

### BACKGROUND

Optical coherence tomography (OCT) has become an important modality for examination of the eye. Two-dimensional (2D) representation of three-dimensional (3D) OCT volume data is one of the OCT visualization approaches that has significantly benefited from technical advancements in OCT technology. Examples of 2D representations (e.g., 2D maps) of 3D OCT volume data may include, by way of example and not limitation, layer thickness maps, retinal curvature maps, OCT *en face* images (e.g., *en face* structural images), and OCTA vasculature maps (e.g., *en face* OCT angiography, or functional OCT images).

To generate layer thickness maps, *en face* images, and (2D) vasculature maps of the retina, multilayer segmentation is often used. Thickness maps are based on the measured thickness difference between retinal layer boundaries. Vasculature maps and OCT *en face* images may be generated, for example, by projecting a sub-volume between two layer boundaries using the mean, sum, percentile, etc. Thus, the creation of these 2D maps (or 2D representations of a 3D volume, or sub-volume), often rely on the effectiveness of automated segmentation algorithms to identify the layers upon which the 2D maps are based.

In order to track disease progression over time, it is desirable to compare two corresponding OCT data sets (e.g., OCT volumes and/or two corresponding 2D maps) of the same tissue taken at different times, e.g., taken on different doctor visits. This entails measuring changes between the two corresponding OCT volumes and/or 2D maps (e.g., thickness maps, *en face* images, vasculature maps, etc.) over time, which in turn, may require registration of longitudinal data (acquired from the same subject). However, the registration of the two corresponding OCT data sets can be a difficult task due to, for example: pathological changes in the retina from one visit to another; layer segmentation error in OCT data of one or both visits, such as due to severe pathology, that may lead to partially incorrect 2D maps that cannot be registered accurately; pathological changes that affect one or more sub retinal volume data relate to a specific disease (e.g. superficial and deeper retinal layers may be affected by diabetic retinopathy); quality changes of OCT data between visits (for example if different OCT systems of different imaging quality or different OCT technology/modality are used on different visits, or if imaging conditions were not consistent); or large lateral, or other type of, motion. Even if the above problems are avoided, subtle changes over time can be difficult to detect since the magnitude of the change can be very small, particularly over short periods of time.

The effective comparison of two OCT data sets over time is directly dependent upon the effectiveness of the registration (e.g., the lining up of corresponding parts) of the two OCT data sets. Thus, the registration problem primarily consists of aligning corresponding landmarks (e.g., characteristic features), for example, such as may be seen/identified in a pair of (corresponding) 2D maps (a pair of thickness maps, *en face* images, vasculature maps, etc.). Landmark matching can be a hard problem due to changes over time in images as described above.

Landmark-based registration can work if a sufficient amount of well-distributed landmarks matches are found across each image (e.g., each of the pair of OCT data sets), and a suitable transformation model is selected. However, one or more of the described problems can affect the quality of the OCT data sets, which can lead to an insufficient number of identifiable landmarks (e.g., characteristic features), or to the identified landmarks not being well-distributed across a 2D map. For example, if a portion of an *en face* image is of low quality, it is likely that no (or an insufficient number of) landmarks will be identifiable within that low-quality portion, leading to a failure in registration of the OCT data set from which the *en face* image was generated.

Current approaches for addressing the registration problem center around attempting to improve the quality of individual *en face* or *vasculature* maps, such as by defining a single *en face* based on the combination of multiple *enfaces* or vasculature maps. In this manner, the registration of two OCT data sets is still based on single *en face* or vasculature map registration. Examples are this approach may be found in Andrew Lang, at al., Combined Registration and Motion Correction of Longitudinal Retinal OCT Data, Proc SPIE Int Soc Opt Eng. 2016 February 27; 9784, and in Jing Wu, at al., Stable Registration of Pathological 3D-OCT Scans Using Retinal Vessels, Proceedings of the Ophthalmic Medical Image Analysis International Workshop, Sep 14th, 2014. Further examples may be found in Pan Lingjiao et al., Segmentation Guided Registrationfor 3D Spectral-Domain Optical Coherence Tomography Images, IEEE ACCESS, vol. 7, pages 138833-138845, XP011748561, in WO 2018/175654 A1 and in Gan Yu et al., An automated 3D registration method for optical coherence tomography volumes, 2014, 36TH ANNUAL INTERNATIONAL CONFERENCE OF THE IEEE ENGINEERING IN MEDICINE AND BIOLOGY SOCIETY, IEEE., 26 August 2014 (2014-08-26), pages 3873-3876, XP032675775.

It is an object of the present invention to provide a method/system for improving the reliability of registering pairs of corresponding OCT/OCTA data sets, such as may be taken at different times.

It is another object of the present invention to improve the registration of corresponding OCT/OCTA data sets of low quality.

### SUMMARY OF INVENTION

The above objects are met in an OCT method/system that applies one or more techniques for improving registration quality. The present invention improves registration of two corresponding OCT volumes (e.g., OCT data sets) by making better use of more of the available information, particularly when the OCT volumes may be of low quality, or of deceased tissue, or of any of the other issues mentioned above. Applicants noted that the prior art methods of registering OCT volumes by always using the same target slabs (e.g., sub-volume bounded by the same two target layers) may affect the accuracy of the registration, since it is possible that the above-mentioned problems may affect one or both of these target layers disproportionately as compared to other layers in the OCT volume. By contrast, a main idea of the present approach is to use landmark matches of multiple pairs of images created from two OCT volumes subject to the registration (e.g., multiple 2D maps defined from multiple corresponding sub-volumes of the two OCT volumes). The registered images can be OCT *en faces* or OCTA vasculature maps or a mixture of OCT *en faces* and OCTA vasculature maps, or thickness maps, or other types of 2D maps. Landmarks can be detected in a pair of 3D OCT/OCTA volumes, and XY positions of the landmark matches (e.g., as determined from the registered 2D maps) may be used for registration.

In addition, or alternatively, multiple distinct 2D maps may also be derived from a single (e.g., parent or base) 2D map (e.g., a macular thickness map). For example, multiple curvature maps (e.g., derived or child/children maps) may be derived from each thickness map (e.g., base map). The thickness map and its corresponding, multiple curvature maps may then be used for landmark matching (e.g., registration) to define (registration) transformation parameters/features (or a transformation matrix) that define a custom transformation model for registering two OCT data sets.

Applicants have also found that the multiple maps derived from a single (base or parent) map (e.g., multiple curvature maps derived from a macular thickness map) may be used to identify retinal, physiological landmarks that would otherwise not be detectable in OCT data of low image quality, or of deceased tissue, or having many image artifacts (e.g., motion artifacts). For example, a low quality OCT volume may produce *en face* or vascular images of such low image quality that they would generally not be suitable for detection of a target physiological landmarks, such as the fovea. However, one may still obtain a good quality thickness map from such a low quality OCT volume, and the multiple curvatures maps derived from the thickness map (e.g., each curvature map being based on a different curvature characteristic of the thickness map) can aid in identifying the fovea. That is, the (base or parent) thickness map and its corresponding (derived or children) curvature maps may be used for fovea location estimation using, for example, various machine learning models/techniques.

Other objects and attainments together with a fuller understanding of the invention will become apparent and appreciated by referring to the following description and claims taken in conjunction with the accompanying drawings.

The embodiments disclosed herein are only examples, and the scope of this disclosure is not limited to them. Any embodiment feature mentioned in one claim category, e.g. system, can be claimed in another claim category, e.g. method, as well. The dependencies or references back in the attached claims are chosen for formal reasons only. However, any subject matter resulting from a deliberate reference back to any previous claims can be claimed as well, so that any combination of claims and the features thereof are disclosed and can be claimed regardless of the dependencies chosen in the attached claims.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

In the drawings wherein like reference symbols/characters refer to like parts:
FIG. 1, FIG. 2, and FIG. 3 provide examples of registering corresponding pairs of OCT data sets of Age-Related Macular Degeneration (AMD) patients taken at two different doctor visits.
FIG. 4 provides a comparison of B-scans and *en face* images taken with a high quality OCT system with those taken with a low-cost line-field SD-OCT.
FIG. 5 shows pairs of thickness maps that can be used for registration purposes.
FIG. 6 shows an example of landmark matching between two thickness maps.
FIG. 7 shows a pair of thickness maps and their corresponding curvature maps.
FIGS. 8A and 8B show two exemplary AMD cases from two doctor visits using a Cirrus^{®} instrument.
FIGS. 9A and 9B provide two examples of a normal and a central serous retinopathy (CSR) case, respectively, from the same doctor's visit using a low-cost, line-field SD-OCT instrument.
FIG. 10 shows a macular thickness map produced by the same low-cost system used to produce the *en face* images in the second row of FIG. 4, and illustrates the placement of an Early Treatment Diabetic Retinopathy Study (ETDRS) grid on the fovea.
FIG. 11 shows an example network of a U-Net architecture suitable for solving the present fovea finding problem.
FIG. 12 illustrates a generalized frequency domain optical coherence tomography system used to collect 3D image data of the eye suitable for use with the present invention.
FIG. 13 shows an exemplary OCT B-scan image of a normal retina of a human eye, and illustratively identifies various canonical retinal layers and boundaries.
FIG. 14 shows an example of an *en face* vasculature image/map.
FIG. 15 shows an exemplary B-scan of a vasculature (OCTA) image.
FIG. 16 illustrates an example of a multilayer perceptron (MLP) neural network.
FIG. 17 shows a simplified neural network consisting of an input layer, a hidden layer, and an output layer.
FIG. 18 illustrates an example convolutional neural network architecture.
FIG. 19 illustrates an example U-Net architecture.
FIG. 20 illustrates an example computer system (or computing device or computer).

### DESCRIPTION OF THE PREFERRED EMBODIMENTS

When attempting to register OCT volumes, one may use an *en face* or vascular (e.g., OCTA) map or other (e.g., frontal-view) 2D representation/map of corresponding slabs (e.g., sub-volumes) from each of the OCT volumes, and uses the single pair of corresponding *en face* or vasculature maps for registration. That is, the 2D representations provided by the corresponding *en faces* or vasculature maps are compared to identify points of similarity for alignment purposes. This may be done by using one or more (known) techniques for identifying characteristic features (e.g., structures, pixels, image characteristics, etc. that can be defined in a manner distinguishable from other feature points/regions in the 2D representation), aligning corresponding characteristic features (as determined from similarities in their definitions) from the two 2D representations, and defining (registration) transformation parameters, or a (registration) transformation matrix, that can be applied to 2D representations to transform them (e.g., adjust their the position, angle, shape, etc.) in a manner that permits at least a portion of the 2D representations to align. In order to properly align the whole of the 2D representations, a broad distribution of aligned characteristic features spanning the whole (or a majority) of the area of the 2D representations is desirable. Once the (registration) transformation parameters are defined, they may be ported/applied (e.g., on an A-scan by A-scan basis) to their corresponding OCT volumes for registration. Axial corrections may also be applied, such as by axial alignment/registration of corresponding A-scans (from the corresponding OCT volumes), if necessary. Optionally, the 2D representations used for registration may be defined from a combination of multiple *en face* (structural) images or vasculature maps (e.g., *en face* angiography images). That is, one may combine multiple *en face* images or vasculature maps to generate a single *en face* image for registration. This may provide a 2D image with additional image definition, which may render additional characteristic features.

The present invention provides alternate methods for registering OCT volumes. Unless otherwise stated or understood from context, hereinafter, the term *en face* may be used interchangeably with the term 2D representation, and may include, for example, *en face* images and/or vascular maps and/or thickness maps and/or other types of 2D maps/images as may be derived from these or defined from an OCT slab.

One embodiment of the present invention uses landmark matches of multiple corresponding (e.g., pairs of) *en faces* from corresponding OCT volumes (e.g., two or more OCT volumes of the same eye taken at different check-up and/or scan times). For example, the multiple *en faces* may be created from multiple different OCT sub-volumes (e.g., defined between different pairs of tissue layers within an OCT volume, for example, between two retinal layers or between a target retinal layer and an axial offset from the target retinal layer). The *en faces* may be OCT-based *en face* images or OCTA-based vasculature maps or a mixture of OCT *en face* images and OCTA vasculature maps, and/or other types of 2D representations or maps, e.g., thickness maps and/or curvature maps. Thus, the multiple corresponding (e.g., pairs of) *en faces* may be defined from different definitions of sub-volumes (e.g., multiple definitions of a corresponding of sub-volumes), and each pair of (or set of corresponding) *en faces* would render its own corresponding (local) set of characteristic features. A global set of characteristic features (landmarks) comprised of characteristic features from all the different *en faces* (or 2D representations/maps) may then be aligned together, as a group. This permits the identifying of more consistent characteristic features across the multiple *en faces,* and the discarding of characteristic features that may be due to errors in one or more *en faces,* but not found in other (e.g., in all or in a majority of, or a predefined minimum number of or a predefined percentage of) *en faces.* Additionally, since characteristic features are identified in multiple, independent *en faces,* the probability of identifying a broader distribution of characters features across the entirety of an overlapping 2D space, is improved when considering all the (valid) characteristic features across all the *en faces,* as a whole/group. In this manner, landmarks (characteristic features) may be detected in a pair of 3D OCT volumes, and XY positions of the landmark matches may be used for 2D registration.

The present approach may use one or more of the following summary of method steps (as applied, for example, to a pair (or more) of OCT/OCTA volumes that are to be registered) to identify matching characteristic features and define a transformation model (e.g., comprised of, or based on, registration transformation parameters) for registering the pair of OCT/OCTA volumes.
1) Select two (e.g., corresponding) layers (e.g. ILM [inner limiting membrane] and the outer boundary of the IPL [inner plexiform layer]) to generate a 2D image (e.g., a 2D representation of the slab defined by the two selected layers), such as an *en face* image and/or vasculature map and/or thickness map, for each OCT/OCTA volume.
2) Select one of the 2D images as a reference image.
3) Identify/define landmarks (characteristic features) in the reference image, such as by random sampling the reference image or by using a feature finding algorithm to find a sufficient number of landmarks.
4) Identify/define corresponding reference landmarks in one or more other 2D images using a feature finding/matching algorithm (e.g. template matching), which may use the same, or similar, landmarks definition approach of step 3.
5) Repeat step 1 to 4, above, to define multiple corresponding 2D images of the OCT/OCTA volumes that are to be registered (e.g., *en face* images and/or vasculature maps).
6) Use all (e.g., valid) landmark matches from all 2D images (*en face* images and/or vasculature maps) to define a global set of characteristic features (landmarks) for landmark-based registration. For example, the landmark-based registration may include:
   a. use a suitable transformation (e.g. rigid, affine, non-linear)
   b. use RANSAC (random sample consensus), or other feature matching algorithm, to select a subset of best landmark matches.
   c. select a subset of best landmark matches (such as by an exhaustive search, or other appropriate method)
   d. maximize landmarks distribution across the 2D images

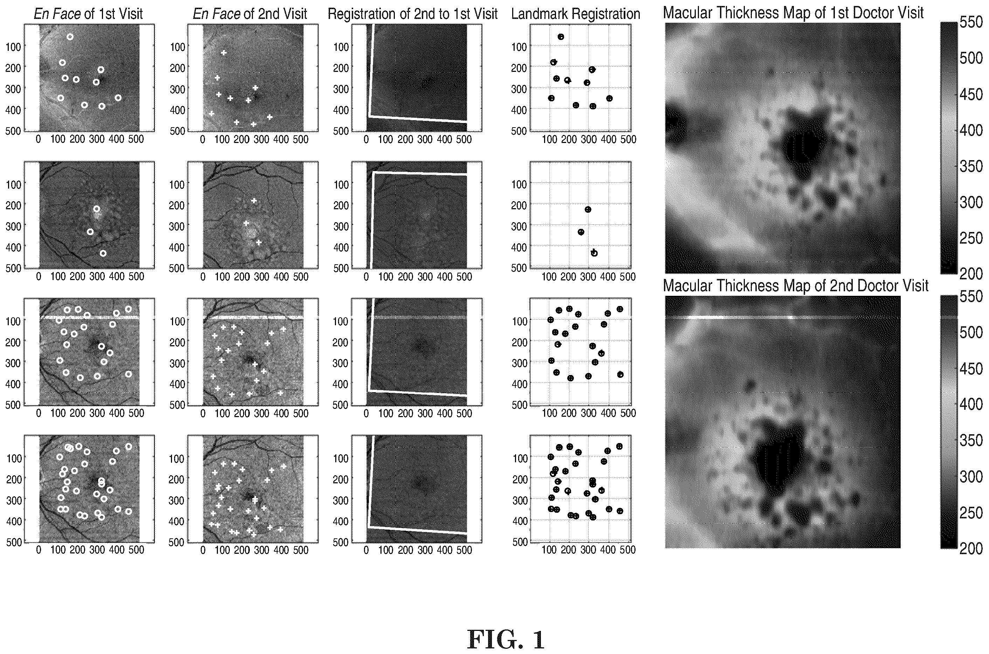

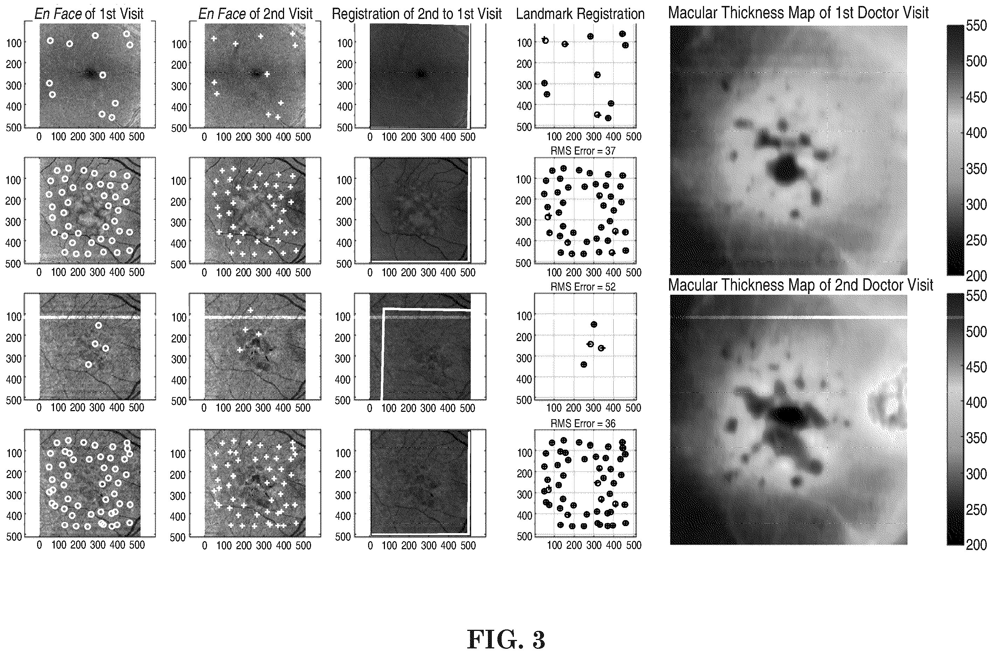

**FIGS. 1****,** **2** **and** **3** provide examples of registering corresponding pairs of OCT data sets (of Age-Related Macular Degeneration (AMD) patients) taken at two different doctor visits. For illustration purposes, each of FIGS. 1, 2, and 3 shows a macular thickness map of the first visit (at the top-right side) and of the second visit (at the bottom-right side). The thickness maps illustrate their use in illness progression analysis. For example, FIGS. 1 and 3 illustrate how the foveal region may become less defined over time, which may be indicative of illness progression. In FIGS. 1, 2 and 3, the first three rows (from the top) show the registration of individual *en face* images (defined from different sub-volumes) with a subset of a local set of landmark (characteristic feature) matches ("Landmark Registration," the fourth column from the left), as selected by the present algorithm. For exemplary purposes, in each of FIG. 1, 2 and 3, the OCT *en face* images in the first row are generated based on the ILM and 0.5*(ILM+RPE) layers using mean projection; the OCT *en face* images in the second row are generated based on the 0.5*(ILM+RPE) and RPE layers using mean projection; and the OCT *en face* images in the third row are generated based on the RPE and RPE+100 microns layers using mean projection. These layers are suggested since they are often the easiest/quickest to identify, even in low quality OCT data. In these examples, the last row (the fourth row from the top) shows the registration of the third row *en face* images, but using a global set of characteristic features comprised of all (valid) landmarks (over 100 landmark matches) selected from the multiple local sets of characteristic features (landmarks), which may include landmarks (characteristic features) from the first two rows (and other matched 2D representations, not shown). Thus, the last row may be viewed as the most accurate registration. A subset of landmarks that were selected by the algorithm is shown in the figures (the fourth column from the left).

The example of FIG. 1 shows better landmark matching in *en face* images generated based on the RPE and RPE+100 microns layers. Using all landmarks from all *en face* images creates a global set of characteristic features (landmarks) with the maximum number of landmarks with maximum distribution (across the 2D space of the images), which can lead to more accurate registration.

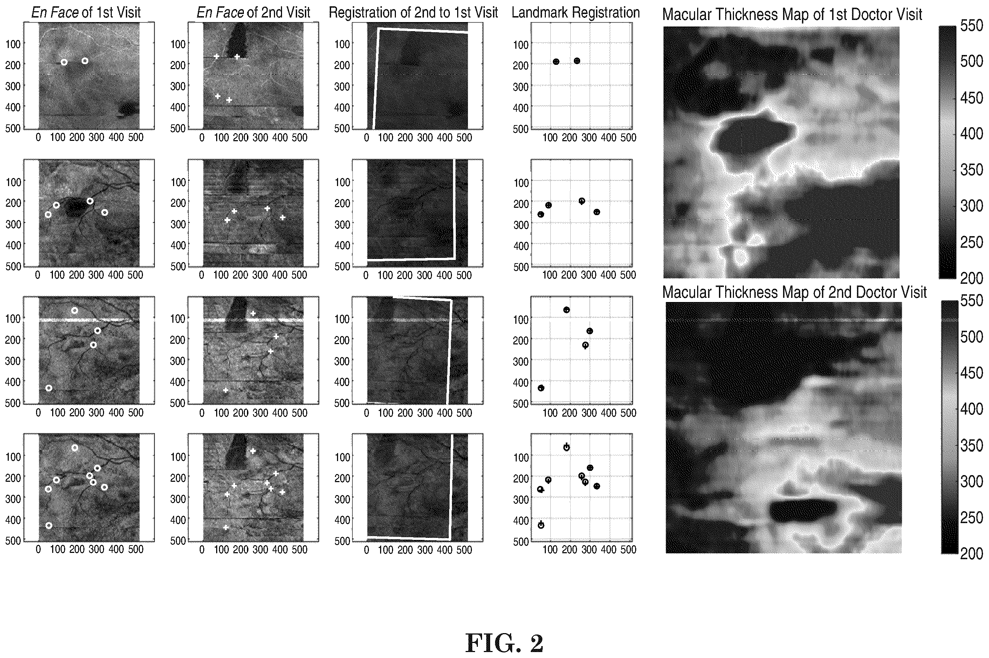

The example of FIG. 2 illustrates the performance of the present registration method in the presence of segmentation error and large saccade motions in the 2nd visit. Using all landmarks from all *en face* images creates the maximum number of landmarks with maximum distribution, which again leads to more accurate registration.

The example of FIG. 3 shows better landmark matching in *en face* images generated based on the 0.5*(IILM+RPE) and RPE layers. Using all landmarks from all *en face* images creates the maximum number of landmarks with maximum distribution, which leads to more accurate registration, as shown in the fourth row from the top.

The present method may also be extended to 3D OCT/OCTA volumes. One approach may include the following steps:
1) Select one of the volumes as a reference volume.
2) Find landmarks in the reference volume by using a 3D feature finding algorithm to find a sufficient number of 3D landmarks.
3) Find corresponding reference landmarks in the other volume using a feature matching algorithm (e.g. 3D template matching)
4) Use XY coordinates of matching 3D landmarks for 2D registration.
5) Use XYZ coordinates of matching 3D landmarks for 3D registration

Additionally (or alternatively) to defining multiple 2D representations using multiple sub-volume definition, one may also extract/derive multiple additional 2D representations from an existing 2D map or image. For example, one may extract multiple image texture maps, or color maps, etc. from an *en face* image (e.g., OCT data) or vascular map (e.g., OCTA data), and each of the extracted information may define a new 2D representation. Another example, however, is to derive multiple new 2D representations from an existing thickness map. Although a thickness map inherently includes depth information due to its thickness (e.g., axial/depth) information, it is customary to display this information in a 2D color format (or grayscale if color is not available), and is herein therefore included in the present 2D representation discussion.

It has been found that in cases of low quality OCT data (e.g., where *en face* images and/or vascular maps may not provide sufficient information/detail to generate a sufficient number of characteristic features), it may still be possible to generate a good thickness map. Since a retina's thickness might not vary much, extracting sufficient characteristic features from a well-defined thickness map may still be challenging. However, although a healthy retina's thickness may have little variation, the retina does have a pronounced curvature due to the eye being round. One may derive multiple curvature maps from a (preferably macular) thickness map, and use the more distinct feature of the curvature maps to extract a sufficient number of characteristic features for proper registration of the OCT data sets, even those of low quality.

As is explained above, 2D representation of 3D OCT volume is one of the OCT visualization approaches that has significantly benefited from technical advancements in OCT technology. One example of 2D representation of 3D OCT volume is a layer thickness map. To generate layer thicknesses, multilayer segmentation is used. The thickness is measured based on the difference between one or more retinal layer boundaries.

### Image registration using thickness map and curvature maps:

In order to measure the changes of the thicknesses over time, registration of longitudinal data (acquired from the same subject) is required. OCT *en faces* (and vascular maps) may be used to register two OCT volumes in lateral direction. Typically, similarities between two images is used in image registration algorithms. It can be difficulty, however, to detect regions of similarity in lower quality OCT data, such as may be provided by two low-cost, line-field OCT *en face* images, due to the poor contrast of the *en face* images, which may make these images unusable for registration purposes.

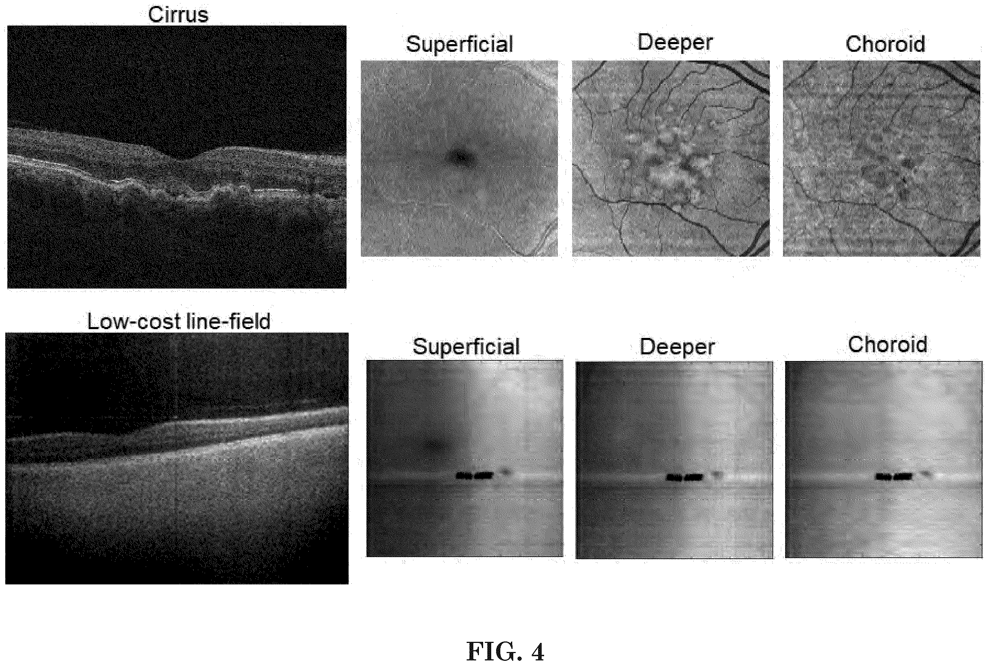

**FIG. 4** provides a comparison of B-scans and *en face* images taken with a high quality OCT system (e.g., a Cirrus^{®} System from Carl Zeiss Meditec, Inc (CZMI)^{®}, Dublin CA, USA) with those of a low-cost line-field SD-OCT. As can be seen, the high quality OCT system provides much contrast and image definition in its B-scan and at each of its three different sub-volumes, here identified as superficial, deeper, and choroid. By contrast, the low-cost line-field B-scan missed much of the detailed variation provided by the Cirrus system, and its *en face* images provide little, or no, distinction between its different *en face* images (from its corresponding different sub-volumes: superficial, deeper, and choroid).

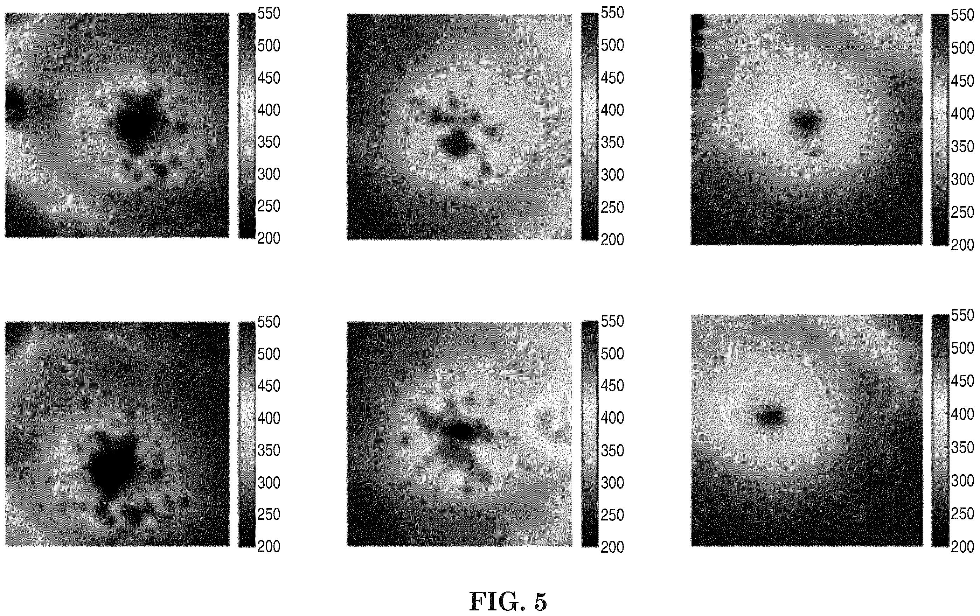

In contrast, regions of similarity in macular thickness maps (taken with a low cost OCT system) of the same eye can be detected. **FIG. 5** shows pairs of thickness maps that can be used for registration purposes. However, using only thickness maps for registration may be a difficult task due to:
1) thickness maps are smooth surfaces and finding enough point correspondences in two thickness maps may be a difficult task, especially in normal cases where the thickness map variation are minimal compared to thickness maps of disease cases
2) pathological changes may affect one or more regions of sub-retinal volume data relate to a specific disease (e.g. superficial and deeper retinal layers are affected by diabetic retinopathy).
Thus, using only thickness maps may affect the accuracy of the registration.

The registration problem primarily consists of aligning the corresponding landmarks as seen in a pair of thickness maps. Landmark matching can be a hard problem due to changes over time in two maps, as described above, but landmark-based registration can work well if: well distributed landmarks matches are found across the maps; and a suitable transformation model (e.g., comprised of, or based on, registration transformation parameters) is selected.

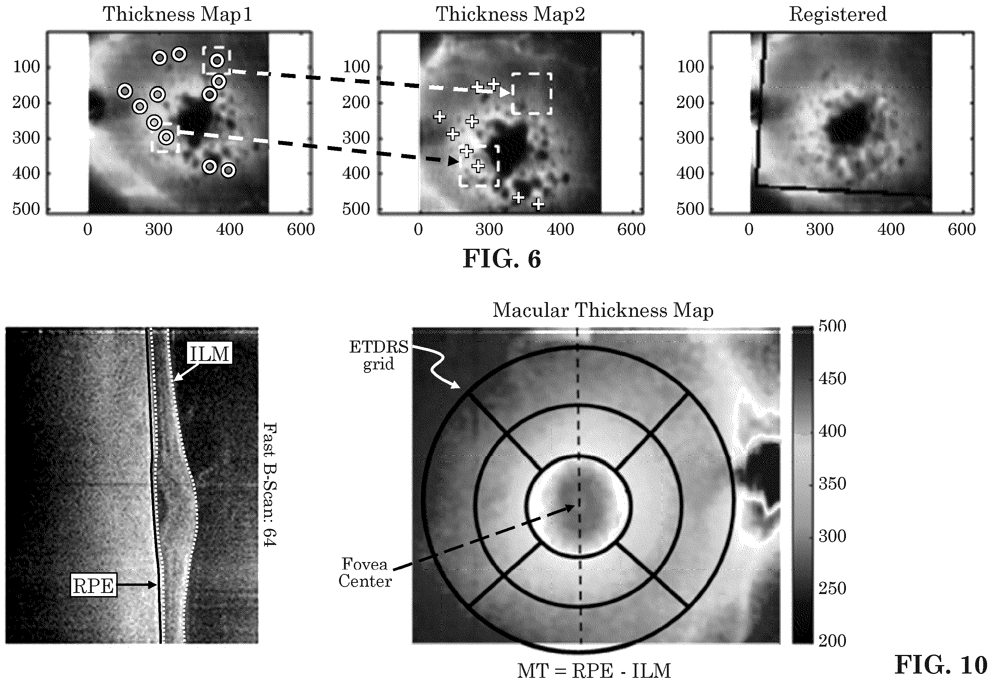

**FIG. 6** shows an example of landmark matching between two thickness maps. In the present example, the landmark matches are not well distributed across the entirety of the 2D space defined by the thickness maps, which can lead to poor registration quality.

A solution is therefore needed to overcome the above problems, which may affect the registration quality. The present embodiment uses landmark matches of multiple pairs of maps (e.g. 2D maps). Using multiple pairs of maps can generate additional point correspondences at different location to enhance the distribution of point correspondences. Examples of maps that may be used include:
1) the thickness maps of different retinal layers
2) a thickness map and corresponding curvatures maps
3) a mixture of steps (1) and (2), above

In general, curvatures measure how a surface bends by different amounts in different directions at a surface point. The advantage of using curvature maps (of the retina) is that these maps have higher variation and contrast than the thickness map itself.

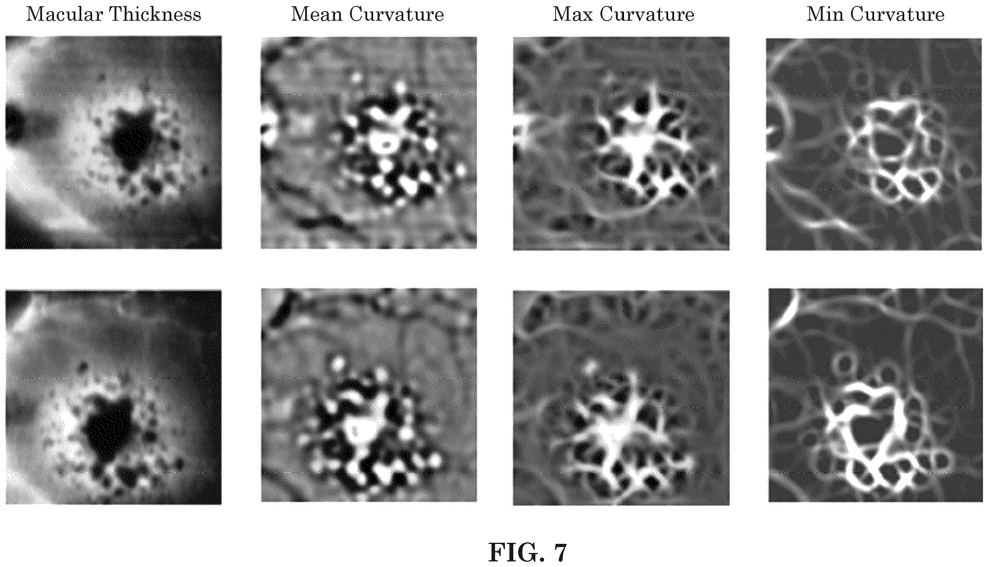

**FIG. 7** shows a pair of thickness maps and their corresponding (derived) curvature maps. In the present example, three different curvature maps (mean curvature, max curvature, and minimum curvature) are derived from each of the thickness maps. Other example of curvature maps that may be derived from a thickness map, such as Gaussian, are known in the literature, and any such map(s) may be used in the present embodiment.

### Registration:

A summary of a portion of the present method of using multiple maps is provided herein. To register two OCT volumes of the same eye:
1) Use two layers (e.g. ILM and outer RPE) to generate a macular thickness map for each OCT volume.
2) Generate/derive one or more (e.g., a series of) curvature maps (Gaussian, mean, max, min, etc. curvature maps) for each macular thickness map.
3) Select a macular thickness map and corresponding curvature maps as reference maps.
4) Find landmarks in the reference maps, such as by random sampling the reference maps or using a feature finding algorithm to find sufficient number of landmarks.
5) Find corresponding reference landmarks in the second macular thickness map and corresponding curvature maps using a feature matching/finding algorithm (e.g. template matching).
6) Use all (or a mixture of) landmark matches from all (or multiple) maps for landmark-based registration
   a. use a suitable transformation (e.g. rigid, affine, non-linear)
   b. use RANSAC (random sample consensus), or other method, to select a subset of best landmark matches
   c. use exhaustive search to select a subset of best landmark matches
   d. ensure maximum landmarks distribution across the image

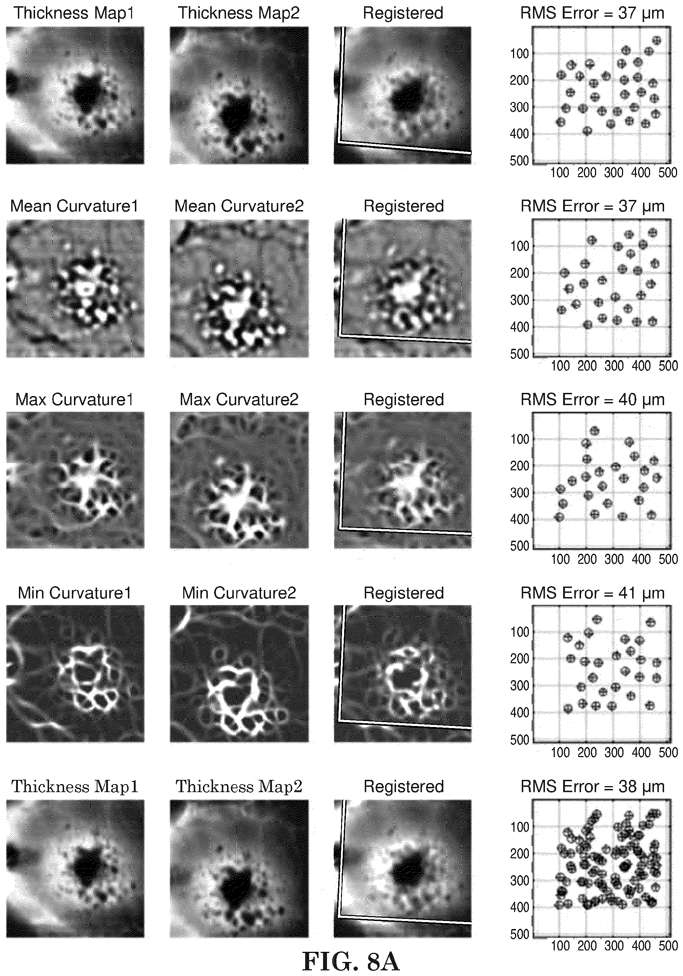

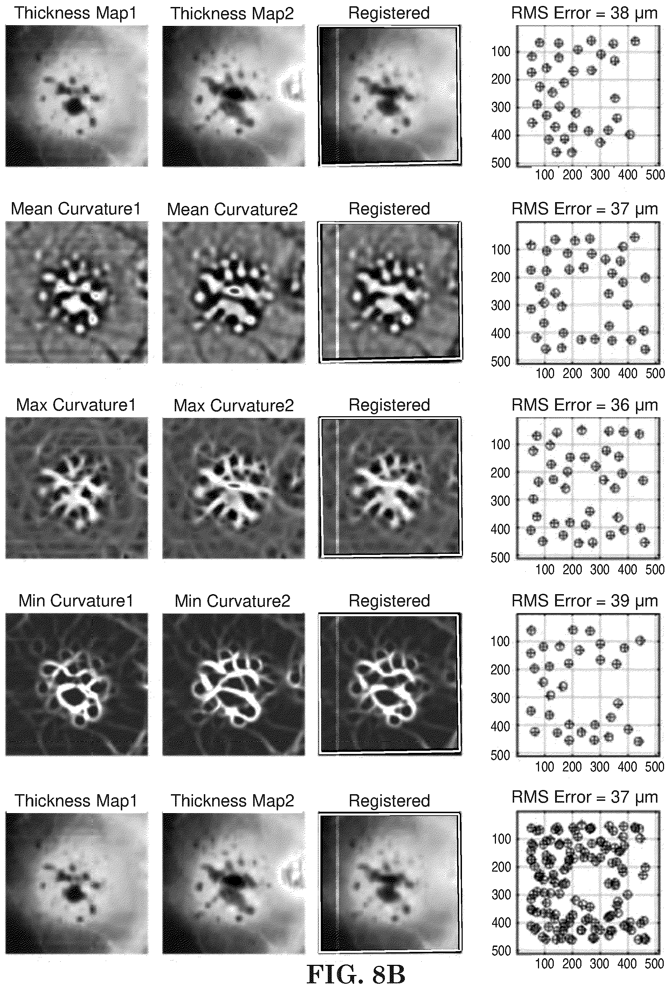

**FIGS. 8A** **and** **8B** show two exemplary AMD cases from two doctor visits using a Cirrus instrument. In each example, the first four rows (from the top) show the registration of individual maps using their respective local sets of characteristic features (landmarks) and showing a subset of landmark matches selected by the present algorithm. In each example, the bottom (last) row (from the top) shows the registration of the macular thickness map using a global set of (e.g., valid) characteristic features selected from all landmarks (e.g. over 100 initial landmark matches per map). A subset of (e.g., valid) landmarks that were selected by the algorithm is shown in each figure at the right-most column. As shown, using all landmarks from all maps creates the maximum number of landmarks with maximum distribution, which can lead to more accurate registration, as shown in the bottom (last) row.

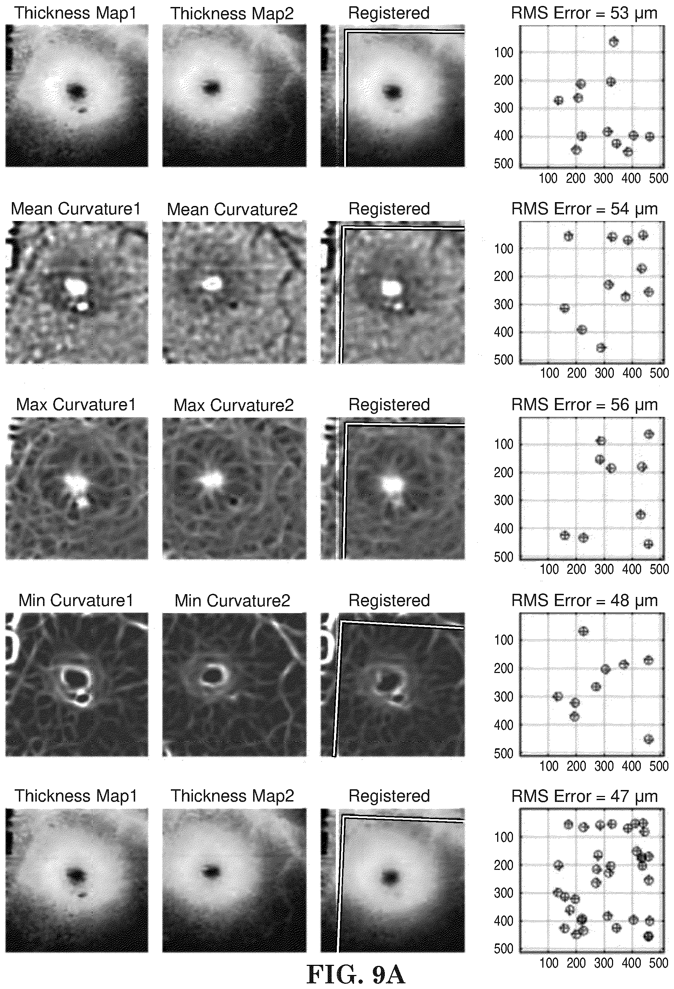

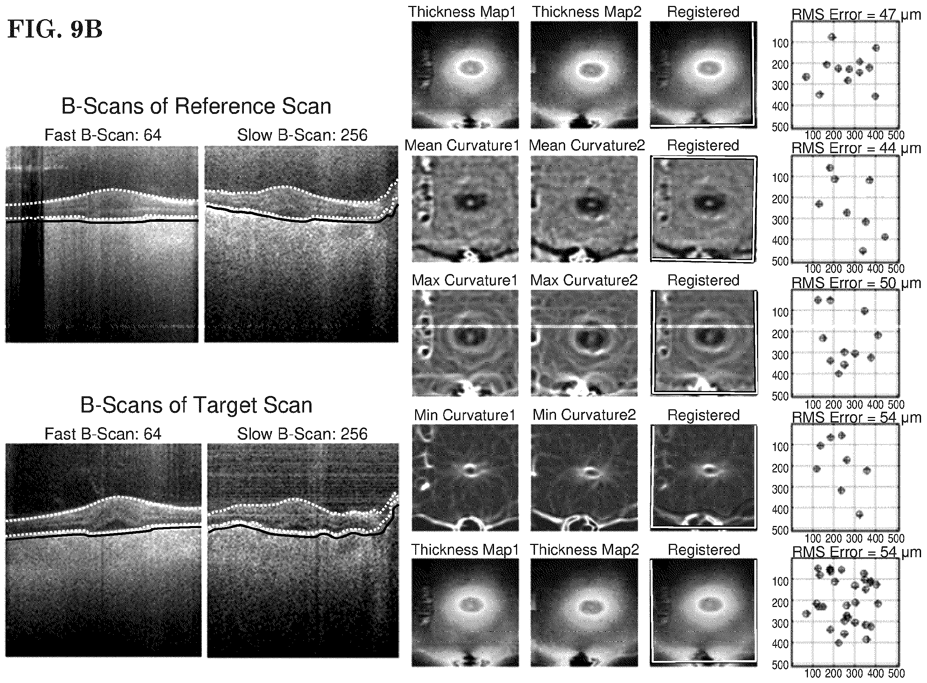

**FIGS. 9A** **and** **9B** provide two examples of a normal and a central serous retinopathy (CSR) case, respectively, from the same doctor's visit using a low-cost, line-field SD-OCT instrument. In each example, the first four rows (from the top) show the registration of individual maps using their respective local sets of characteristic features (landmarks) and showing a subset of landmark matches selected by the present algorithm. The last (e.g. bottom) row shows the registration of the macular thickness map using a global set of (e.g., valid) characteristic features (landmarks) selected from all landmarks (e.g. over 100 initial landmark matches per map). In both FIG. 9A and 9B, a subset of landmarks that were selected by the algorithm is shown in the right-most column.

A distinction of this approach from that of the above embodiment, is that this approach relies more on multiple maps (curvature maps) created/derived from a single (base or parent) map (thickness map), whereas the above embodiment relies more on multiple independent OCT/OCTA slabs for registration, but it is to be understood that both methods may be used in conjunction/combination (both contributing landmarks/characteristic features) for registration purposes. For example, the landmarks may be detected using OCT/OCTA *en face* images and vascular maps as well as thickness maps and corresponding curvature maps.

Some of the embodiments described above take advantage of mathematical tools, such as surface curvatures, that come from differential geometry. One advantage of using thickness maps and corresponding curvature maps is that the registration and fovea finding are independent of OCT data acquired from different OCT technologies. This can be a convenient way to solve multimodal registration and fovea finding problems, e.g., one may use different OCT systems of different OCT quality and different technologies (SD-OCT, SS-OCT, etc.).

Typically, *en face* images and/or vascular maps are used for identifying different physiological features of an eye, such as the fovea. However as explained above, a low cost OCT system might not provide *en face* images or vascular maps of sufficient contrast/detail for this purpose. It is herein put forth that thickness maps (and/or their derived curvature maps) may also be used for identifying distinct ophthalmic physiological features, such as the fovea.

### Fovea finding using thickness map and curvature maps:

The location of the fovea may be found using a thickness map and corresponding curvature maps. The fovea location is clinically important because it is the locus of highest visual acuity. Automated analyses of retinal disease use the location of fovea as a reference point. The fovea has a number of distinguishing anatomical characteristics (e.g. vessel patterns and FAZ) that may be used to identify it in OCTA images. The presence of pathology such as edema, posthyaloid membrane traction, CNV, and other disease types may disrupt the normal foveal structure. Additionally, this anatomy can be disrupted by a variety of outer-retinal pathologies.

One of the use cases of the fovea position is the placement of Early Treatment Diabetic Retinopathy Study (ETDRS) grid at the fovea location (see **FIG. 10****).** As shown above in reference to FIG. 4, the poor contrast of an OCT *en face* image taken using a low-cost line-field SD-OCT system may be unusable for finding the location of the fovea. In contrast, FIG. 10 shows that a macular thickness map (e.g., between the ILM and RPE layers, left side image), and corresponding curvature maps (not shown), produced by the same low-cost system contain information in the foveal region that can be used for finding the location of the fovea. One may use thickness maps, and corresponding curvature maps, in combination with machine learning techniques to develop a machine model for identifying the fovea given a thickness map or OCT data set as input. For example, a deep learning method can be used for automatic detection of the fovea center using macular a thickness map and corresponding curvature maps. The same idea applies to other retinal landmarks such as the optic nerve head (ONH).

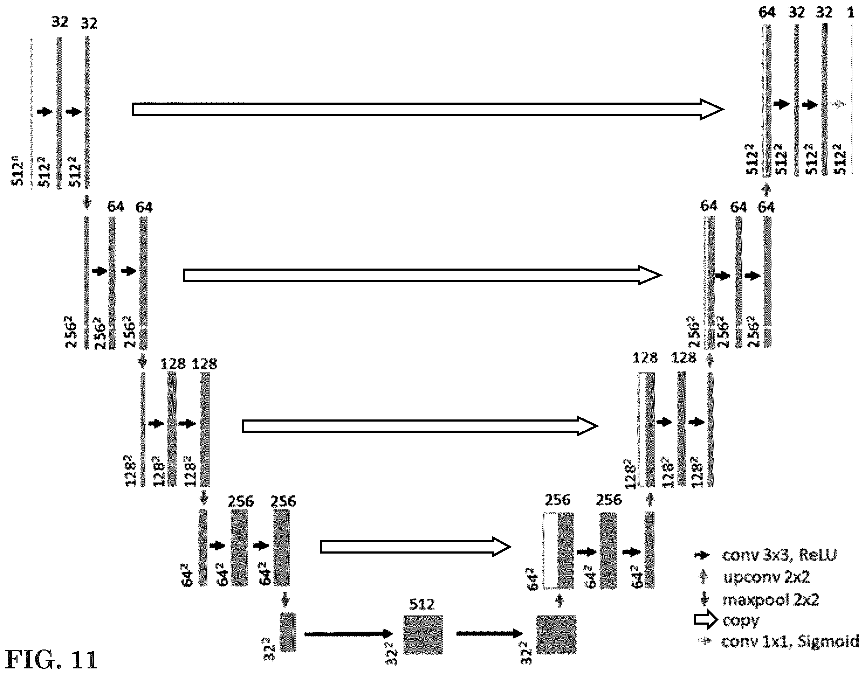

An exemplary implementation of the present embodiment employed a convolutional neural network to segment fovea region in macular thickness map and corresponding curvature maps. A discussion of machine learning and neural networks, in particular, is provided below. The target training images were generated by creating a 3-mm binary disk mask around the grader-indentified fovea center by human experts using OCT data or macular thickness map or combination. One example of a suitable deep learning algorithm/machine/model/system is a (e.g., n-channel) U-net architecture in which five contracting and five expansive convolutional layers, ReLU activation, max pooling, binary cross entropy loss, sigmoid activation in final layer are employed. The input channels can be one or more macular thickness maps and its curvature maps, such as Gaussian curvature, mean curvature, max curvature, min curvature maps. In the present example, data augmentation (rotation around the center between -9° and 9° with a step of 3°) was performed to increase the number of training data. The U-net predicted the ONH area followed by a template matching using the 3-mm diameter disc to find the fovea center. **FIG. 11** shows an example network of a U-Net architecture that can solve the present fovea finding problem. Other examples of neural networks, including another exemplary U-Net architecture, suitable for use with the present invention to find the fovea (or other retinal, physiological structure) are provided below.

The above-described multi *en face* images and thickness maps approach can be used to train a deep learning, machine model (e.g. convolutional neural network (CNN)), and this approach/method can be used to solve/provide a motion estimation using optical flow, or to directly estimate the transformation parameters (e.g., provide a registration model that can be used to transform the moving image to the reference image). Optical flow is a measure of sub-pixel translation between two images. For example, optical flow may be velocity describing (e.g., for the pixels of an image) how fast and in which direction the sub-image regions (which may represent features or objects in the image) move. For instance, a network such as FlowNet (e.g., a convolutional (neural) network used for learning optical flow), can be used to calculate the optical flow. A CNN can be trained to output the transformation parameters which is used to register the moving image to match the reference image.

Hereinafter is provided a description of various hardware and architectures suitable for the present invention.

### Optical Coherence Tomography Imaging System

Generally, optical coherence tomography (OCT) uses low-coherence light to produce two-dimensional (2D) and three-dimensional (3D) internal views of biological tissue. OCT enables in vivo imaging of retinal structures. OCT angiography (OCTA) produces flow information, such as vascular flow from within the retina. Examples of OCT systems are provided in U.S. Pats. 6,741,359 and 9,706,915, and examples of an OCTA systems may be found in U.S. Pats. 9,700,206 and 9,759,544. An exemplary OCT/OCTA system is provided herein.

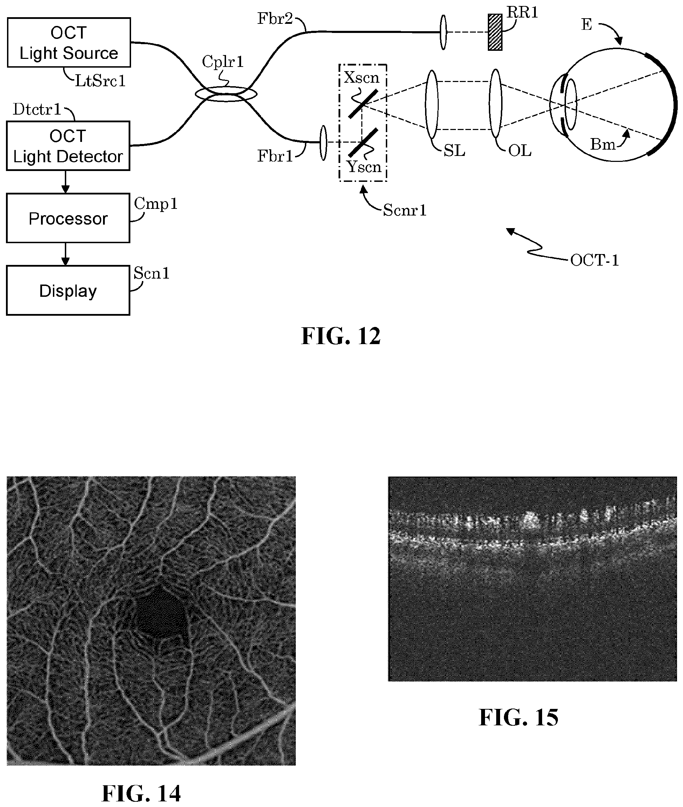

**FIG. 12** illustrates a generalized frequency domain optical coherence tomography (FD-OCT) system used to collect 3D image data of the eye suitable for use with the present invention. An FD-OCT system OCT_1 includes a light source, LtSrc1. Typical light sources include, but are not limited to, broadband light sources with short temporal coherence lengths or swept laser sources. A beam of light from light source LtSrc 1 is routed, typically by optical fiber Fbr1, to illuminate a sample, e.g., eye E; a typical sample being tissues in the human eye. The light source LrSrc1 may, for example, be a broadband light source with short temporal coherence length in the case of spectral domain OCT (SD-OCT) or a wavelength tunable laser source in the case of swept source OCT (SS-OCT). The light may be scanned, typically with a scanner Scnr1 between the output of the optical fiber Fbr1 and the sample E, so that the beam of light (dashed line Bm) is scanned laterally over the region of the sample to be imaged. The light beam from scanner Scnr1 may pass through a scan lens SL and an ophthalmic lens OL and be focused onto the sample E being imaged. The scan lens SL may receive the beam of light from the scanner Scnr1 at multiple incident angles and produce substantially collimated light, ophthalmic lens OL may then focus onto the sample. The present example illustrates a scan beam that needs to be scanned in two lateral directions (e.g., in x and y directions on a Cartesian plane) to scan a desired field of view (FOV). An example of this would be a point-field OCT, which uses a point-field beam to scan across a sample. Consequently, scanner Scnr1 is illustratively shown to include two sub-scanner: a first sub-scanner Xscn for scanning the point-field beam across the sample in a first direction (e.g., a horizontal x-direction); and a second sub-scanner Yscn for scanning the point-field beam on the sample in traversing second direction (e.g., a vertical y-direction). If the scan beam were a line-field beam (e.g., a line-field OCT), which may sample an entire line-portion of the sample at a time, then only one scanner may be needed to scan the line-field beam across the sample to span the desired FOV. If the scan beam were a full-field beam (e.g., a full-field OCT), no scanner may be needed, and the full-field light beam may be applied across the entire, desired FOV at once.

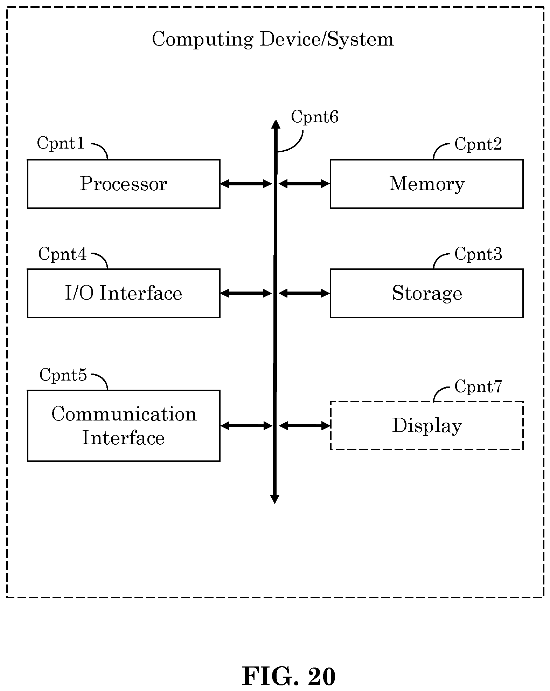

Irrespective of the type of beam used, light scattered from the sample (e.g., sample light) is collected. In the present example, scattered light returning from the sample is collected into the same optical fiber Fbr1 used to route the light for illumination. Reference light derived from the same light source LtSrc1 travels a separate path, in this case involving optical fiber Fbr2 and retro-reflector RR1 with an adjustable optical delay. Those skilled in the art will recognize that a transmissive reference path can also be used and that the adjustable delay could be placed in the sample or reference arm of the interferometer. Collected sample light is combined with reference light, for example, in a fiber coupler Cplr1, to form light interference in an OCT light detector Dtctr1 (e.g., photodetector array, digital camera, etc.). Although a single fiber port is shown going to the detector Dtctr1, those skilled in the art will recognize that various designs of interferometers can be used for balanced or unbalanced detection of the interference signal. The output from the detector Dtctr1is supplied to a processor (e.g., internal or external computing device) Cmp1 that converts the observed interference into depth information of the sample. The depth information may be stored in a memory associated with the processor Cmp1 and/or displayed on a display (e.g., computer/electronic display/screen) Scn1. The processing and storing functions may be localized within the OCT instrument, or functions may be offloaded onto (e.g., performed on) an external processor (e.g., an external computing device), to which the collected data may be transferred. An example of a computing device (or computer system) is shown in FIG. 20. This unit could be dedicated to data processing or perform other tasks which are quite general and not dedicated to the OCT device. The processor (computing device) Cmp1 may include, for example, a field-programmable gate array (FPGA), a digital signal processor (DSP), an application specific integrated circuit (ASIC), a graphics processing unit (GPU), a system on chip (SoC), a central processing unit (CPU), a general purpose graphics processing unit (GPGPU), or a combination thereof, that may performs some, or the entire, processing steps in a serial and/or parallelized fashion with one or more host processors and/or one or more external computing devices.

The sample and reference arms in the interferometer could consist of bulk-optics, fiber-optics, or hybrid bulk-optic systems and could have different architectures such as Michelson, Mach-Zehnder or common-path based designs as would be known by those skilled in the art. Light beam as used herein should be interpreted as any carefully directed light path. Instead of mechanically scanning the beam, a field of light can illuminate a one or two-dimensional area of the retina to generate the OCT data (see for example, U.S. Patent 9332902; D. Hillmann et al, "Holoscopy - Holographic Optical Coherence Tomography," *Optics Letters,* 36(13): 2390 2011; Y. Nakamura, et al, "High-Speed Three Dimensional Human Retinal Imaging by Line Field Spectral Domain Optical Coherence Tomography," *Optics Express,* 15(12):7103 2007; Blazkiewicz et al, "Signal-To-Noise Ratio Study of Full-Field Fourier-Domain Optical Coherence Tomography," *Applied Optics,* 44(36):7722 (2005)). In time-domain systems, the reference arm needs to have a tunable optical delay to generate interference. Balanced detection systems are typically used in TD-OCT and SS-OCT systems, while spectrometers are used at the detection port for SD-OCT systems. The invention described herein could be applied to any type of OCT system. Various aspects of the invention could apply to any type of OCT system or other types of ophthalmic diagnostic systems and/or multiple ophthalmic diagnostic systems including but not limited to fundus imaging systems, visual field test devices, and scanning laser polarimeters.

In Fourier Domain optical coherence tomography (FD-OCT), each measurement is the real-valued spectral interferogram (Sj(k)). The real-valued spectral data typically goes through several post-processing steps including background subtraction, dispersion correction, etc. The Fourier transform of the processed interferogram, results in a complex valued OCT signal output Aj(z)=|Aj|eiφ. The absolute value of this complex OCT signal, |Aj|, reveals the profile of scattering intensities at different path lengths, and therefore scattering as a function of depth (z-direction) in the sample. Similarly, the phase, φj can also be extracted from the complex valued OCT signal. The profile of scattering as a function of depth is called an axial scan (A-scan). A set of A-scans measured at neighboring locations in the sample produces a cross-sectional image (tomogram or B-scan) of the sample. A collection of B-scans collected at different transverse locations on the sample makes up a data volume or cube. For a particular volume of data, the term fast axis refers to the scan direction along a single B-scan whereas slow axis refers to the axis along which multiple B-scans are collected. The term "cluster scan" may refer to a single unit or block of data generated by repeated acquisitions at the same (or substantially the same) location (or region) for the purposes of analyzing motion contrast, which may be used to identify blood flow. A cluster scan can consist of multiple A-scans or B-scans collected with relatively short time separations at approximately the same location(s) on the sample. Since the scans in a cluster scan are of the same region, static structures remain relatively unchanged from scan to scan within the cluster scan, whereas motion contrast between the scans that meets predefined criteria may be identified as blood flow.

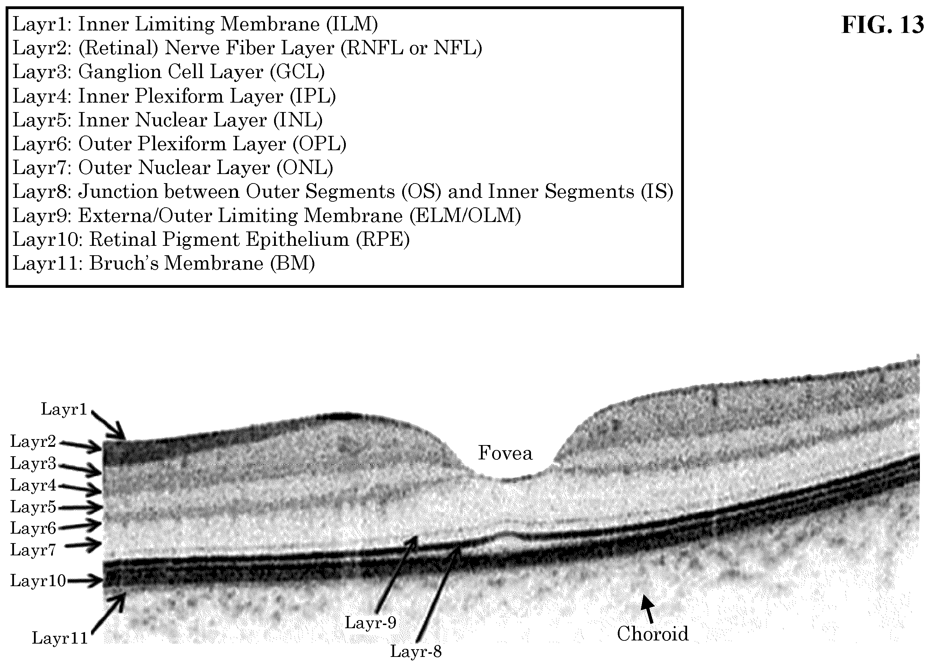

A variety of ways to create B-scans are known in the art including but not limited to: along the horizontal or x-direction, along the vertical or y-direction, along the diagonal of x and y, or in a circular or spiral pattern. B-scans may be in the x-z dimensions but may be any cross-sectional image that includes the z-dimension. An example OCT B-scan image of a normal retina of a human eye is illustrated in **FIG. 13****.** An OCT B-scan of the retinal provides a view of the structure of retinal tissue. For illustration purposes, FIG. 13 identifies various canonical retinal layers and layer boundaries. The identified retinal boundary layers include (from top to bottom): the inner limiting membrane (ILM) Lyer1, the retinal nerve fiber layer (RNFL or NFL) Layr2, the ganglion cell layer (GCL) Layr3, the inner plexiform layer (IPL) Layr4, the inner nuclear layer (INL) Layr5, the outer plexiform layer (OPL) Layr6, the outer nuclear layer (ONL) Layr7, the junction between the outer segments (OS) and inner segments (IS) (indicated by reference character Layr8) of the photoreceptors, the external or outer limiting membrane (ELM or OLM) Layr9, the retinal pigment epithelium (RPE) Layr10, and the Bruch's membrane (BM) Layr11.

In OCT Angiography, or Functional OCT, analysis algorithms may be applied to OCT data collected at the same, or approximately the same, sample locations on a sample at different times (e.g., a cluster scan) to analyze motion or flow (see for example US Patent Publication Nos. 2005/0171438, 2012/0307014, 2010/0027857, 2012/0277579 and US Patent No. 6,549,801). An OCT system may use any one of a number of OCT angiography processing algorithms (e.g., motion contrast algorithms) to identify blood flow. For example, motion contrast algorithms can be applied to the intensity information derived from the image data (intensity-based algorithm), the phase information from the image data (phase-based algorithm), or the complex image data (complex-based algorithm). An *en face* image is a 2D projection of 3D OCT data (e.g., by averaging the intensity of each individual A-scan, such that each A-scan defines a pixel in the 2D projection). Similarly, an *en face* vasculature image is an image displaying motion contrast signal in which the data dimension corresponding to depth (e.g., z-direction along an A-scan) is displayed as a single representative value (e.g., a pixel in a 2D projection image), typically by summing or integrating all or an isolated portion of the data (see for example US Patent No. 7,301,644). OCT systems that provide an angiography imaging functionality may be termed OCT angiography (OCTA) systems.

**FIG. 14** shows an example of an *en face* vasculature image. After processing the data to highlight motion contrast using any of the motion contrast techniques known in the art, a range of pixels corresponding to a given tissue depth from the surface of internal limiting membrane (ILM) in retina, may be summed to generate the *en face* (e.g., frontal view) image of the vasculature. **FIG. 15** shows an exemplary B-scan of a vasculature (OCTA) image. As illustrated, structural information may not be well-defined since blood flow may traverse multiple retinal layers making them less defined than in a structural OCT B-scan, as shown in FIG. 13. Nonetheless, OCTA provides a non-invasive technique for imaging the microvasculature of the retina and the choroid, which may be critical to diagnosing and/or monitoring various pathologies. For example, OCTA may be used to identify diabetic retinopathy by identifying microaneurysms, neovascular complexes, and quantifying foveal avascular zone and nonperfused areas. Moreover, OCTA has been shown to be in good agreement with fluorescein angiography (FA), a more traditional, but more evasive, technique requiring the injection of a dye to observe vascular flow in the retina. Additionally, in dry age-related macular degeneration, OCTA has been used to monitor a general decrease in choriocapillaris flow. Similarly in wet age-related macular degeneration, OCTA can provides a qualitative and quantitative analysis of choroidal neovascular membranes. OCTA has also been used to study vascular occlusions, e.g., evaluation of nonperfused areas and the integrity of superficial and deep plexus.

### Neural Networks

As discussed above, the present invention may use a neural network (NN) machine learning (ML) model. For the sake of completeness, a general discussion of neural networks is provided herein. The present invention may use any, singularly or in combination, of the below described neural network architecture(s). A neural network, or neural net, is a (nodal) network of interconnected neurons, where each neuron represents a node in the network. Groups of neurons may be arranged in layers, with the outputs of one layer feeding forward to a next layer in a multilayer perceptron (MLP) arrangement. MLP may be understood to be a feedforward neural network model that maps a set of input data onto a set of output data.

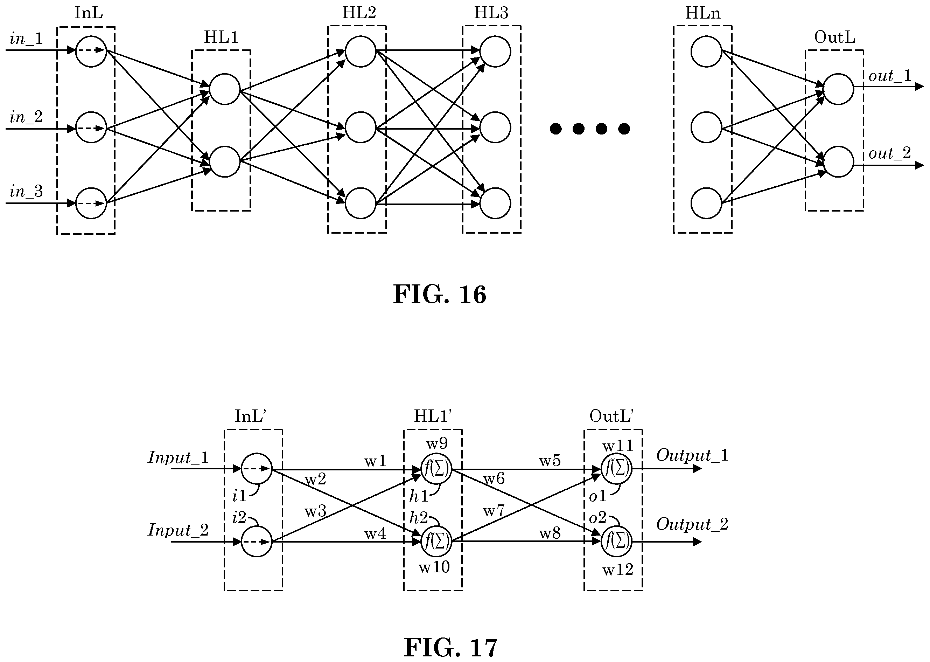

**FIG. 16** illustrates an example of a multilayer perceptron (MLP) neural network. Its structure may include multiple hidden (e.g., internal) layers HL1 to HLn that map an input layer InL (that receives a set of inputs (or vector input) in_1 to in_3) to an output layer OutL that produces a set of outputs (or vector output), e.g., out_1 and out_2. Each layer may have any given number of nodes, which are herein illustratively shown as circles within each layer. In the present example, the first hidden layer HL1 has two nodes, while hidden layers HL2, HL3, and HLn each have three nodes. Generally, the deeper the MLP (e.g., the greater the number of hidden layers in the MLP), the greater its capacity to learn. The input layer InL receives a vector input (illustratively shown as a three-dimensional vector consisting of in_1, in_2 and in_3), and may apply the received vector input to the first hidden layer HL1 in the sequence of hidden layers. An output layer OutL receives the output from the last hidden layer, e.g., HLn, in the multilayer model, processes its inputs, and produces a vector output result (illustratively shown as a two-dimensional vector consisting of out_1 and out_2).

Typically, each neuron (or node) produces a single output that is fed forward to neurons in the layer immediately following it. But each neuron in a hidden layer may receive multiple inputs, either from the input layer or from the outputs of neurons in an immediately preceding hidden layer. In general, each node may apply a function to its inputs to produce an output for that node. Nodes in hidden layers (e.g., learning layers) may apply the same function to their respective input(s) to produce their respective output(s). Some nodes, however, such as the nodes in the input layer InL receive only one input and may be passive, meaning that they simply relay the values of their single input to their output(s), e.g., they provide a copy of their input to their output(s), as illustratively shown by dotted arrows within the nodes of input layer InL.

For illustration purposes, **FIG. 17** shows a simplified neural network consisting of an input layer InL', a hidden layer HL1', and an output layer OutL'. Input layer InL' is shown having two input nodes i1 and i2 that respectively receive inputs Input_1 and Input_2 (e.g. the input nodes of layer InL' receive an input vector of two dimensions). The input layer InL' feeds forward to one hidden layer HL1' having two nodes h1 and h2, which in turn feeds forward to an output layer OutL' of two nodes o1 and o2. Interconnections, or links, between neurons (illustrative shown as solid arrows) have weights w1 to w8. Typically, except for the input layer, a node (neuron) may receive as input the outputs of nodes in its immediately preceding layer. Each node may calculate its output by multiplying each of its inputs by each input's corresponding interconnection weight, summing the products of it inputs, adding (or multiplying by) a constant defined by another weight or bias that may be associated with that particular node (e.g., node weights w9, w10, w11, w12 respectively corresponding to nodes h1, h2, o1, and o2), and then applying a non-linear function or logarithmic function to the result. The non-linear function may be termed an activation function or transfer function. Multiple activation functions are known the art, and selection of a specific activation function is not critical to the present discussion. It is noted, however, that operation of the ML model, or behavior of the neural net, is dependent upon weight values, which may be learned so that the neural network provides a desired output for a given input.

The neural net learns (e.g., is trained to determine) appropriate weight values to achieve a desired output for a given input during a training, or learning, stage. Before the neural net is trained, each weight may be individually assigned an initial (e.g., random and optionally non-zero) value, e.g., a random-number seed. Various methods of assigning initial weights are known in the art. The weights are then trained (optimized) so that for a given training vector input, the neural network produces an output close to a desired (predetermined) training vector output. For example, the weights may be incrementally adjusted in thousands of iterative cycles by a technique termed back-propagation. In each cycle of back-propagation, a training input (e.g., vector input or training input image/sample) is fed forward through the neural network to determine its actual output (e.g., vector output). An error for each output neuron, or output node, is then calculated based on the actual neuron output and a target training output for that neuron (e.g., a training output image/sample corresponding to the present training input image/sample). One then propagates back through the neural network (in a direction from the output layer back to the input layer) updating the weights based on how much effect each weight has on the overall error so that the output of the neural network moves closer to the desired training output. This cycle is then repeated until the actual output of the neural network is within an acceptable error range of the desired training output for the given training input. As it would be understood, each training input may require many back-propagation iterations before achieving a desired error range. Typically, an epoch refers to one back-propagation iteration (e.g., one forward pass and one backward pass) of all the training samples, such that training a neural network may require many epochs. Generally, the larger the training set, the better the performance of the trained ML model, so various data augmentation methods may be used to increase the size of the training set. For example, when the training set includes pairs of corresponding training input images and training output images, the training images may be divided into multiple corresponding image segments (or patches). Corresponding patches from a training input image and training output image may be paired to define multiple training patch pairs from one input/output image pair, which enlarges the training set. Training on large training sets, however, places high demands on computing resources, e.g. memory and data processing resources. Computing demands may be reduced by dividing a large training set into multiple mini-batches, where the mini-batch size defines the number of training samples in one forward/backward pass. In this case, and one epoch may include multiple mini-batches. Another issue is the possibility of a NN overfitting a training set such that its capacity to generalize from a specific input to a different input is reduced. Issues of overfitting may be mitigated by creating an ensemble of neural networks or by randomly dropping out nodes within a neural network during training, which effectively removes the dropped nodes from the neural network. Various dropout regulation methods, such as inverse dropout, are known in the art.

It is noted that the operation of a trained NN machine model is not a straightforward algorithm of operational/analyzing steps. Indeed, when a trained NN machine model receives an input, the input is not analyzed in the traditional sense. Rather, irrespective of the subject or nature of the input (e.g., a vector defining a live image/scan or a vector defining some other entity, such as a demographic description or a record of activity) the input will be subjected to the same predefined architectural construct of the trained neural network (e.g., the same nodal/layer arrangement, trained weight and bias values, predefined convolution/deconvolution operations, activation functions, pooling operations, etc.), and it may not be clear how the trained network's architectural construct produces its output. Furthermore, the values of the trained weights and biases are not deterministic and depend upon many factors, such as the amount of time the neural network is given for training (e.g., the number of epochs in training), the random starting values of the weights before training starts, the computer architecture of the machine on which the NN is trained, selection of training samples, distribution of the training samples among multiple mini-batches, choice of activation function(s), choice of error function(s) that modify the weights, and even if training is interrupted on one machine (e.g., having a first computer architecture) and completed on another machine (e.g., having a different computer architecture). The point is that the reasons why a trained ML model reaches certain outputs is not clear, and much research is currently ongoing to attempt to determine the factors on which a ML model bases its outputs. Therefore, the processing of a neural network on live data cannot be reduced to a simple algorithm of steps. Rather, its operation is dependent upon its training architecture, training sample sets, training sequence, and various circumstances in the training of the ML model.

In summary, construction of a NN machine learning model may include a learning (or training) stage and a classification (or operational) stage. In the learning stage, the neural network may be trained for a specific purpose and may be provided with a set of training examples, including training (sample) inputs and training (sample) outputs, and optionally including a set of validation examples to test the progress of the training. During this learning process, various weights associated with nodes and node-interconnections in the neural network are incrementally adjusted in order to reduce an error between an actual output of the neural network and the desired training output. In this manner, a multi-layer feedforward neural network (such as discussed above) may be made capable of approximating any measurable function to any desired degree of accuracy. The result of the learning stage is a (neural network) machine learning (ML) model that has been learned (e.g., trained). In the operational stage, a set of test inputs (or live inputs) may be submitted to the learned (trained) ML model, which may apply what it has learned to produce an output prediction based on the test inputs.

Like the regular neural networks of FIGS. 16 and 17, convolutional neural networks (CNN) are also made up of neurons that have learnable weights and biases. Each neuron receives inputs, performs an operation (e.g., dot product), and is optionally followed by a non-linearity. The CNN, however, may receive raw image pixels at one end (e.g., the input end) and provide classification (or class) scores at the other end (e.g., the output end). Because CNNs expect an image as input, they are optimized for working with volumes (e.g., pixel height and width of an image, plus the depth of the image, e.g., color depth such as an RGB depth defined of three colors: red, green, and blue). For example, the layers of a CNN may be optimized for neurons arranged in 3 dimensions. The neurons in a CNN layer may also be connected to a small region of the layer before it, instead of all of the neurons in a fully-connected NN. The final output layer of a CNN may reduce a full image into a single vector (classification) arranged along the depth dimension.

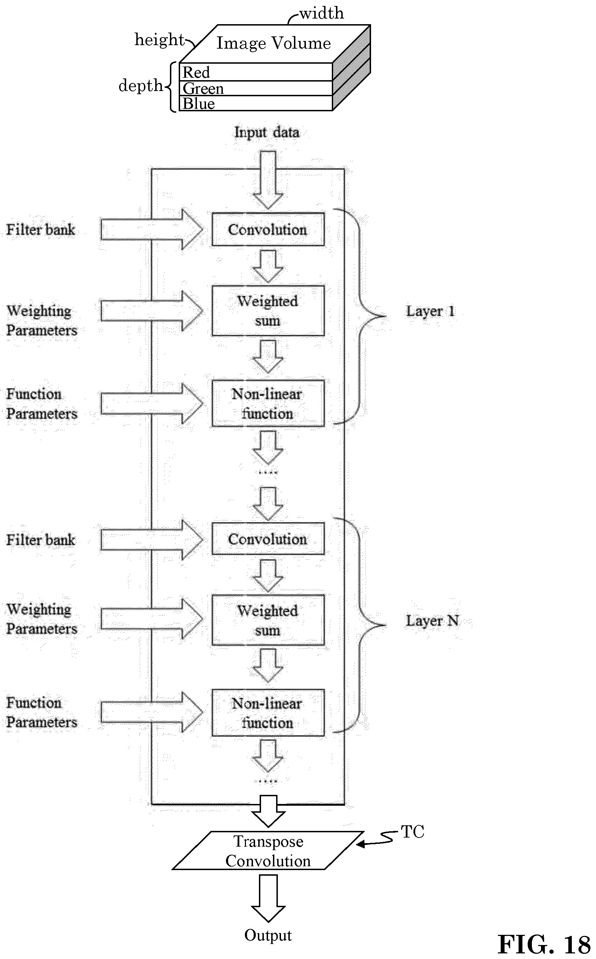

**FIG. 18** provides an example convolutional neural network architecture. A convolutional neural network may be defined as a sequence of two or more layers (e.g., Layer 1 to Layer N), where a layer may include a (image) convolution step, a weighted sum (of results) step, and a non-linear function step. The convolution may be performed on its input data by applying a filter (or kernel), e.g. on a moving window across the input data, to produce a feature map. Each layer and component of a layer may have different pre-determined filters (from a filter bank), weights (or weighting parameters), and/or function parameters. In the present example, the input data is an image, which may be raw pixel values of the image, of a given pixel height and width. In the present example, the input image is illustrated as having a depth of three color channels RGB (Red, Green, and Blue). Optionally, the input image may undergo various preprocessing, and the preprocessing results may be input in place of, or in addition to, the raw input image. Some examples of image preprocessing may include: retina blood vessel map segmentation, color space conversion, adaptive histogram equalization, connected components generation, etc. Within a layer, a dot product may be computed between the given weights and a small region they are connected to in the input volume. Many ways of configuring a CNN are known in the art, but as an example, a layer may be configured to apply an elementwise activation function, such as max (0,x) thresholding at zero. A pooling function may be performed (e.g., along the x-y directions) to down-sample a volume. A fully-connected layer may be used to determine the classification output and produce a one-dimensional output vector, which has been found useful for image recognition and classification. However, for image segmentation, the CNN would need to classify each pixel. Since each CNN layers tends to reduce the resolution of the input image, another stage is needed to up-sample the image back to its original resolution. This may be achieved by application of a transpose convolution (or deconvolution) stage TC, which typically does not use any predefine interpolation method, and instead has learnable parameters.

Convolutional Neural Networks have been successfully applied to many computer vision problems. As explained above, training a CNN generally requires a large training dataset. The U-Net architecture is based on CNNs and can generally be trained on a smaller training dataset than conventional CNNs.

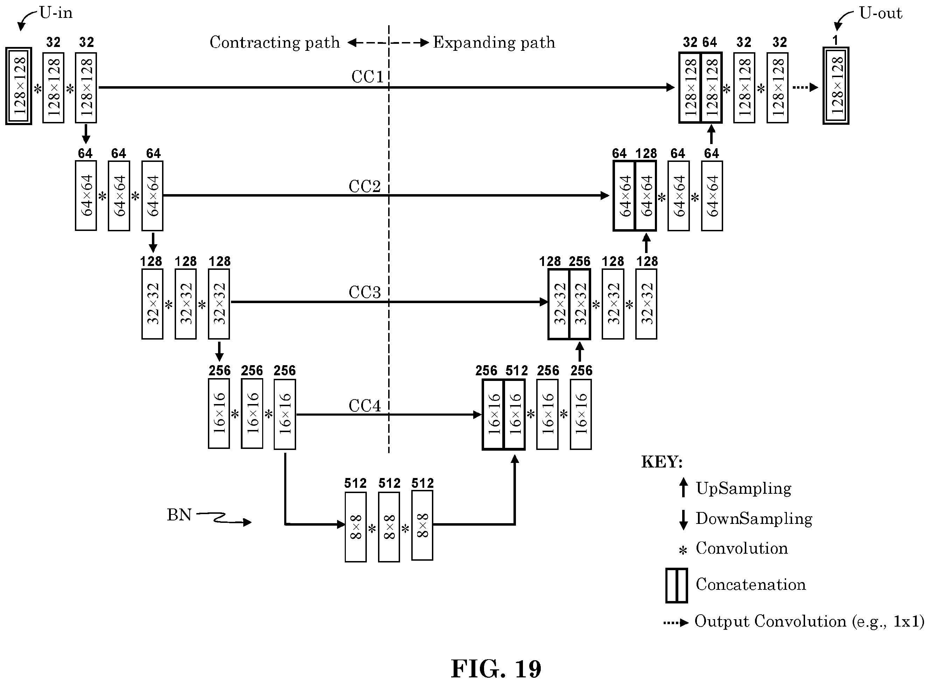

**FIG. 19** illustrates an example U-Net architecture. The present exemplary U-Net includes an input module (or input layer or stage) that receives an input U-in (e.g., input image or image patch) of any given size. For illustration purposes, the image size at any stage, or layer, is indicated within a box that represents the image, e.g., the input module encloses number "128× 128" to indicate that input image U-in is comprised of 128 by 128 pixels. The input image may be a fundus image, an OCT/OCTA *en face,* B-scan image, etc. It is to be understood, however, that the input may be of any size or dimension. For example, the input image may be an RGB color image, monochrome image, volume image, etc. The input image undergoes a series of processing layers, each of which is illustrated with exemplary sizes, but these sizes are illustration purposes only and would depend, for example, upon the size of the image, convolution filter, and/or pooling stages. The present architecture consists of a contracting path (herein illustratively comprised of four encoding modules) followed by an expanding path (herein illustratively comprised of four decoding modules), and copy-and-crop links (e.g., CC1 to CC4) between corresponding modules/stages that copy the output of one encoding module in the contracting path and concatenates it to (e.g., appends it to the back of) the up-converted input of a correspond decoding module in the expanding path. This results in a characteristic U-shape, from which the architecture draws its name. Optionally, such as for computational considerations, a "bottleneck" module/stage (BN) may be positioned between the contracting path and the expanding path. The bottleneck BN may consist of two convolutional layers (with batch normalization and optional dropout).

The contracting path is similar to an encoder, and generally captures context (or feature) information by the use of feature maps. In the present example, each encoding module in the contracting path may include two or more convolutional layers, illustratively indicated by an asterisk symbol "*", and which may be followed by a max pooling layer (e.g., DownSampling layer). For example, input image U-in is illustratively shown to undergo two convolution layers, each with 32 feature maps. As it would be understood, each convolution kernel produces a feature map (e.g., the output from a convolution operation with a given kernel is an image typically termed a "feature map"). For example, input U-in undergoes a first convolution that applies 32 convolution kernels (not shown) to produce an output consisting of 32 respective feature maps. However, as it is known in the art, the number of feature maps produced by a convolution operation may be adjusted (up or down). For example, the number of feature maps may be reduced by averaging groups of feature maps, dropping some feature maps, or other known method of feature map reduction. In the present example, this first convolution is followed by a second convolution whose output is limited to 32 feature maps. Another way to envision feature maps may be to think of the output of a convolution layer as a 3D image whose 2D dimension is given by the listed X-Y planar pixel dimension (e.g., 128×128 pixels), and whose depth is given by the number of feature maps (e.g., 32 planar images deep). Following this analogy, the output of the second convolution (e.g., the output of the first encoding module in the contracting path) may be described as a 128×128×32 image. The output from the second convolution then undergoes a pooling operation, which reduces the 2D dimension of each feature map (e.g., the X and Y dimensions may each be reduced by half). The pooling operation may be embodied within the DownSampling operation, as indicated by a downward arrow. Several pooling methods, such as max pooling, are known in the art and the specific pooling method is not critical to the present invention. The number of feature maps may double at each pooling, starting with 32 feature maps in the first encoding module (or block), 64 in the second encoding module, and so on. The contracting path thus forms a convolutional network consisting of multiple encoding modules (or stages or blocks). As is typical of convolutional networks, each encoding module may provide at least one convolution stage followed by an activation function (e.g., a rectified linear unit (ReLU) or sigmoid layer), not shown, and a max pooling operation. Generally, an activation function introduces non-linearity into a layer (e.g., to help avoid overfitting issues), receives the results of a layer, and determines whether to "activate" the output (e.g., determines whether the value of a given node meets predefined criteria to have an output forwarded to a next layer/node). In summary, the contracting path generally reduces spatial information while increasing feature information.

The expanding path is similar to a decoder, and among other things, may provide localization and spatial information for the results of the contracting path, despite the down sampling and any max-pooling performed in the contracting stage. The expanding path includes multiple decoding modules, where each decoding module concatenates its current up-converted input with the output of a corresponding encoding module. In this manner, feature and spatial information are combined in the expanding path through a sequence of up-convolutions (e.g., UpSampling or transpose convolutions or deconvolutions) and concatenations with high-resolution features from the contracting path (e.g., via CC1 to CC4). Thus, the output of a deconvolution layer is concatenated with the corresponding (optionally cropped) feature map from the contracting path, followed by two convolutional layers and activation function (with optional batch normalization).

The output from the last expanding module in the expanding path may be fed to another processing/training block or layer, such as a classifier block, that may be trained along with the U-Net architecture. Alternatively, or in addition, the output of the last upsampling block (at the end of the expanding path) may be submitted to another convolution (e.g., an output convolution) operation, as indicated by a dotted arrow, before producing its output U-out. The kernel size of output convolution may be selected to reduce the dimensions of the last upsampling block to a desired size. For example, the neural network may have multiple features per pixels right before reaching the output convolution, which may provide a 1×1 convolution operation to combine these multiple features into a single output value per pixel, on a pixel-by-pixel level.

### Computing Device/System

**FIG. 20** illustrates an example computer system (or computing device or computer device). In some embodiments, one or more computer systems may provide the functionality described or illustrated herein and/or perform one or more steps of one or more methods described or illustrated herein. The computer system may take any suitable physical form. For example, the computer system may be an embedded computer system, a system-on-chip (SOC), a single-board computer system (SBC) (such as, for example, a computer-on-module (COM) or system-on-module (SOM)), a desktop computer system, a laptop or notebook computer system, a mesh of computer systems, a mobile telephone, a personal digital assistant (PDA), a server, a tablet computer system, an augmented/virtual reality device, or a combination of two or more of these. Where appropriate, the computer system may reside in a cloud, which may include one or more cloud components in one or more networks.

In some embodiments, the computer system may include a processor Cpnt1, memory Cpnt2, storage Cpnt3, an input/output (I/O) interface Cpnt4, a communication interface Cpnt5, and a bus Cpnt6. The computer system may optionally also include a display Cpnt7, such as a computer monitor or screen.

Processor Cpnt1 includes hardware for executing instructions, such as those making up a computer program. For example, processor Cpnt1 may be a central processing unit (CPU) or a general-purpose computing on graphics processing unit (GPGPU). Processor Cpnt1 may retrieve (or fetch) the instructions from an internal register, an internal cache, memory Cpnt2, or storage Cpnt3, decode and execute the instructions, and write one or more results to an internal register, an internal cache, memory Cpnt2, or storage Cpnt3. In particular embodiments, processor Cpnt1 may include one or more internal caches for data, instructions, or addresses. Processor Cpnt1 may include one or more instruction caches, one or more data caches, such as to hold data tables. Instructions in the instruction caches may be copies of instructions in memory Cpnt2 or storage Cpnt3, and the instruction caches may speed up retrieval of those instructions by processor Cpnt1. Processor Cpnt1 may include any suitable number of internal registers, and may include one or more arithmetic logic units (ALUs). Processor Cpnt1 may be a multi-core processor; or include one or more processors Cpnt1. Although this disclosure describes and illustrates a particular processor, this disclosure contemplates any suitable processor.

Memory Cpnt2 may include main memory for storing instructions for processor Cpnt1 to execute or to hold interim data during processing. For example, the computer system may load instructions or data (e.g., data tables) from storage Cpnt3 or from another source (such as another computer system) to memory Cpnt2. Processor Cpnt1 may load the instructions and data from memory Cpnt2 to one or more internal register or internal cache. To execute the instructions, processor Cpnt1 may retrieve and decode the instructions from the internal register or internal cache. During or after execution of the instructions, processor Cpnt1 may write one or more results (which may be intermediate or final results) to the internal register, internal cache, memory Cpnt2 or storage Cpnt3. Bus Cpnt6 may include one or more memory buses (which may each include an address bus and a data bus) and may couple processor Cpnt1 to memory Cpnt2 and/or storage Cpnt3. Optionally, one or more memory management unit (MMU) facilitate data transfers between processor Cpnt1 and memory Cpnt2. Memory Cpnt2 (which may be fast, volatile memory) may include random access memory (RAM), such as dynamic RAM (DRAM) or static RAM (SRAM). Storage Cpnt3 may include long-term or mass storage for data or instructions. Storage Cpnt3 may be internal or external to the computer system, and include one or more of a disk drive (e.g., hard-disk drive, HDD, or solid-state drive, SSD), flash memory, ROM, EPROM, optical disc, magneto-optical disc, magnetic tape, Universal Serial Bus (USB)-accessible drive, or other type of non-volatile memory.

I/O interface Cpnt4 may be software, hardware, or a combination of both, and include one or more interfaces (e.g., serial or parallel communication ports) for communication with I/O devices, which may enable communication with a person (e.g., user). For example, I/O devices may include a keyboard, keypad, microphone, monitor, mouse, printer, scanner, speaker, still camera, stylus, tablet, touch screen, trackball, video camera, another suitable I/O device, or a combination of two or more of these.

Communication interface Cpnt5 may provide network interfaces for communication with other systems or networks. Communication interface Cpnt5 may include a Bluetooth interface or other type of packet-based communication. For example, communication interface Cpnt5 may include a network interface controller (NIC) and/or a wireless NIC or a wireless adapter for communicating with a wireless network. Communication interface Cpnt5 may provide communication with a WI-FI network, an ad hoc network, a personal area network (PAN), a wireless PAN (e.g., a Bluetooth WPAN), a local area network (LAN), a wide area network (WAN), a metropolitan area network (MAN), a cellular telephone network (such as, for example, a Global System for Mobile Communications (GSM) network), the Internet, or a combination of two or more of these.

Bus Cpnt6 may provide a communication link between the above-mentioned components of the computing system. For example, bus Cpnt6 may include an Accelerated Graphics Port (AGP) or other graphics bus, an Enhanced Industry Standard Architecture (EISA) bus, a front-side bus (FSB), a HyperTransport (HT) interconnect, an Industry Standard Architecture (ISA) bus, an InfiniBand bus, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or other suitable bus or a combination of two or more of these.

Although this disclosure describes and illustrates a particular computer system having a particular number of particular components in a particular arrangement, this disclosure contemplates any suitable computer system having any suitable number of any suitable components in any suitable arrangement.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

While the invention has been described in conjunction with several specific embodiments, it is evident to those skilled in the art that many further alternatives, modifications, and variations will be apparent in light of the foregoing description. Thus, the invention described herein is intended to embrace all such alternatives, modifications, applications and variations as may fall within the scope of the appended claims.

## Claims

1. A method of registering first optical coherence tomography (OCT) volume data to second OCT volume data, comprising:
generating a plurality of image pairs, each image pair including a generated two-dimensional (2D) representation of a sub-volume in the first OCT volume data and a corresponding 2D representation of the corresponding sub-volume in the second OCT volume data;
wherein, for each image pair, identifying a local set of matching characteristic features in its corresponding 2D representations;
defining a set of registration transformation parameters based on a global set of characteristic features based on all the local sets of matching characteristic features extracted from all of the image pairs;
electronically processing, storing, or displaying the registration of the first and second OCT volume data based on the set of registration transformation parameters.

2. The method of claim 1, wherein the corresponding 2D representations in each image pair are *en face* structural images, *en face* angiography images, thickness maps, or curvature maps.

3. The method of claim 1 or 2, wherein different image pairs include a mixture of two or more of *en face* structural images, *en face* angiography images, thickness maps, and curvature maps.

4. The method of any of claims 1 to 3, wherein the 2D representations of different image pairs are based on different physical measures of its corresponding sub-volume.

5. The method of any of claims 1 to 4, wherein the sub-volume of a first of said image pairs is different from the sub-volume of a second of said image pairs.

6. The method of any of claims 1 to 5, wherein at least a fraction of said plurality of image pairs includes a first image pair and one or more derived image pairs based on the first image pair.

7. The method of claim 6, wherein the first image pair are corresponding thickness maps, and the one or more derived images pairs are corresponding curvature maps based on the corresponding thickness maps.

8. The method of claim 6, wherein the first image pair are corresponding *en face* images, and the one or more derived images pairs are based on one or more of the image texture, color, intensity, contrast, and negative image of the *en face* images.

9. The method of any of claims 1 to 8, wherein the first and second OCT volumes are OCT structural volumes or OCT angiography volumes.

10. The method of any of claims 1 to 9, wherein the first OCT volume data is of first region of a sample, the second OCT volume data is of a second region of the sample, the second region at least partially overlapping the first region.

## Patentansprüche

1. Verfahren zum Registrieren von ersten Volumendaten einer optischen Kohärenztomografie (OCT-Volumendaten) mit zweite OCT-Volumendaten, umfassend:
Erzeugen einer Vielzahl von Bildpaaren, wobei jedes Bildpaar eine erzeugte zweidimensionale (2D) Darstellung eines Subvolumens in den ersten OCT-Volumendaten und eine entsprechende 2D-Darstellung des entsprechenden Subvolumens in den zweiten OCT-Volumendaten beinhaltet;
wobei,
für jedes Bildpaar, Identifizieren eines lokalen Satzes von übereinstimmenden charakteristischen Merkmalen in seinen entsprechenden 2D-Darstellungen;
Definieren eines Satzes von Registrierungstransformationsparametern basierend auf einem globalen Satz von charakteristischen Merkmalen basierend auf allen lokalen Sätzen von übereinstimmenden charakteristischen Merkmalen, die aus allen Bildpaaren extrahiert wurden;
elektronisches Verarbeiten, Speichern oder Anzeigen der Registrierung der ersten und der zweiten OCT-Volumendaten basierend auf dem Satz von Registrierungstransformationsparametern.

2. Verfahren nach Anspruch 1, wobei die entsprechenden 2D-Darstellungen in jedem Bildpaar *En-face-*Strukturbilder, *En-face*-Angiographiebilder, Dickenkarten oder Krümmungskarten sind.

3. Verfahren nach Anspruch 1 oder 2, wobei die verschiedenen Bildpaare eine Mischung von *En-face-*Strukturbildern, *En-face-*Angiographiebildern, Dickenkarten oder Krümmungskarten beinhalten.

4. Verfahren nach einem der Ansprüche 1 bis 3, wobei die 2D-Darstellungen von verschiedenen Bildpaaren auf unterschiedlichen physischen Messungen ihrer entsprechenden Subvolumen basiert sind.

5. Verfahren nach einem der Ansprüche 1 bis 4, wobei das Subvolumen eines Ersten der Bildpaare verschieden von dem Subvolumen eines Zweiten der Bildpaare ist.

6. Verfahren nach einem der Ansprüche 1 bis 5, wobei mindestens ein Bruchteil der Vielzahl von Bildpaaren ein erstes Bildpaar und ein oder mehrere, basierend auf dem ersten Bildpaar abgeleitete Bildpaare beinhaltet.

7. Verfahren nach Anspruch 6, wobei das erste Bildpaar entsprechende Dickenkarten sind und wobei das eine oder die mehreren abgeleiteten Bildpaare entsprechende Krümmungskarten sind, die auf den entsprechenden Dickenkarten basiert sind.

8. Verfahren nach Anspruch 6, wobei das erste Bildpaar entsprechende En-face-Bilder sind und wobei das eine oder die mehreren abgeleiteten Bildpaare auf einer oder mehreren der Bildtextur, der Farbe, der Intensität, des Kontrasts und des Negativbildes der *En-face-*Bilder basiert sind.

9. Verfahren nach einem der Ansprüche 1 bis 8, wobei das erste und das zweite OCT-Volumen OCT-Strukturvolumen oder OCT-Angiographievolumen sind.

10. Verfahren nach einem der Ansprüche 1 bis 9, wobei die ersten OCT-Volumendaten von einem ersten Gebiet einer Probe stammen, wobei die zweiten OCT-Volumendaten von einem zweiten Gebiet der Probe stammen, wobei sich das zweite Gebiet mindestens teilweise mit dem ersten Gebiet überschneidet.

## Revendications

1. Procédé d'alignement de premières données volumiques de tomographie en cohérence optique (OCT) sur de deuxièmes données volumiques d'OCT, comprenant :
la génération d'une pluralité de paires d'images, chaque paire d'images comportant une représentation bidimensionnelle (2D) générée d'un sous-volume dans les premières données volumiques d'OCT et une représentation 2D correspondante du sous-volume correspondant dans les deuxièmes données volumiques d'OCT ;
dans lequel,
pour chaque paire d'images, l'identification d'un ensemble local d'éléments caractéristiques correspondants dans ses représentations 2D correspondantes ;
la définition d'un ensemble de paramètres de transformation d'alignement sur la base d'un ensemble global d'éléments caractéristiques basés sur tous les ensembles locaux d'éléments caractéristiques correspondants extraits de toutes les paires d'images ;
le traitement, stockage ou affichage électronique de l'alignement des premières et deuxièmes données volumiques d'OCT sur la base de l'ensemble de paramètres de transformation d'alignement.

2. Procédé de la revendication 1, dans lequel les représentations 2D correspondantes dans chaque paire d'images sont des images structurelles de face, des images d'angiographie de face, des cartes d'épaisseur, ou des cartes de courbure.

3. Procédé de la revendication 1 ou 2, dans lequel des paires d'images différentes comportent un mélange d'au moins deux éléments parmi des images structurelles de face, des images d'angiographie de face, des cartes d'épaisseur et des cartes de courbure.

4. Procédé de l'une quelconque des revendications 1 à 3, dans lequel les représentations 2D de paires d'images différentes sont basées sur des mesures physiques différentes de leur sous-volume correspondant.

5. Procédé de l'une quelconque des revendications 1 à 4, dans lequel le sous-volume d'une première desdites paires d'images est différent du sous-volume d'une deuxième desdites paires d'images.

6. Procédé de l'une quelconque des revendications 1 à 5, dans lequel au moins une fraction de ladite pluralité de paires d'images comporte une première paire d'images et une ou plusieurs paires d'images dérivées basées sur la première paire d'images.

7. Procédé de la revendication 6, dans lequel les images de la première paire d'images sont des cartes d'épaisseur correspondantes, et les images de la ou des paires d'images dérivées sont des cartes de courbure correspondantes basées sur les cartes d'épaisseur correspondantes.

8. Procédé de la revendication 6, dans lequel les images de la première paire d'images sont des images de face correspondantes, et les images de la ou des paires d'images dérivées sont basées sur un ou plusieurs éléments parmi la texture de l'image, la couleur, l'intensité, le contraste et l'image négative des images de face.

9. Procédé de l'une quelconque des revendications 1 à 8, dans lequel les premier et deuxième volumes d'OCT sont des volumes d'OCT structurelle ou des volumes d'angiographie OCT.

10. Procédé de l'une quelconque des revendications 1 à 9, dans lequel les premières données volumiques d'OCT proviennent d'une première région d'un échantillon, les deuxièmes données volumiques d'OCT proviennent d'une deuxième région de l'échantillon, la deuxième région chevauchant au moins partiellement la première région.
